# EUROPÄISCHE PATENTANMELDUNG

(11) **EP 2 286 707 A2**
(43) Veröffentlichungstag der Anmeldung: **23.02.2011**
(21) Anmeldenummer: 10007674.4
(22) Anmeldetag: 23.07.2010
(51) Int. Cl.: A47L 15/24, A47L 15/46

(54) **Energieoptimierte Maschinensteuerung für Reinigungsvorrichtungen**

(30) Priorität: 30.07.2009 DE 102009035668
(71) Anmelder: MEIKO Maschinenbau GmbH & Co. KG, 77652 Offenburg (DE)
(72) Erfinder: Dirschus, Jürgen, 77746 Schutterwald (DE)
(74) Vertreter: Hörschler, Wolfram Johannes

(57) **Zusammenfassung**

Es wird eine Reinigungsvorrichtung (142) zur Reinigung von Reinigungsgut (144) vorgeschlagen. Die Reinigungsvorrichtung (142) umfasst mindestens zwei Verbraucher (116). Die Reinigungsvorrichtung (142) weist eine modulare Steuerung (110) auf, welche eine Maschinensteuerung (112) und mindestens ein kontaktloses Steuerelement (114) umfasst. Die Maschinensteuerung (112) ist zur Durchführung mindestens eines Reinigungsprogramms eingerichtet. Das kontaktlose Steuerelement (114) ist eingerichtet, um mindestens einen der Verbraucher (116) variabel mit Energie zu versorgen. Die Maschinensteuerung (112) ist eingerichtet ist, um mindestens zwei verschiedene Ansteuerstrategien für die Reinigungsvorrichtung (142) bereitzustellen. Jede Ansteuerstrategie umfasst Informationen über benötigten Energien der Verbraucher (116). Die Maschinensteuerung (112) ist eingerichtet, um dem kontaktlosen Steuerelement (114) über mindestens ein Bus-System (120) Informationen über die benötigten Energien der zugehörigen Verbraucher (116) entsprechend einer ausgewählten Ansteuerstrategie zu übermitteln. Das kontaktlose Steuerelement (114) ist eingerichtet, um mindestens einen zugehörigen Verbraucher (116) mit der jeweiligen benötigten Energie zu beaufschlagen.

## Beschreibung

### Gebiet der Erfindung

Die Erfindung betrifft eine Reinigungsvorrichtung zur Reinigung von Reinigungsgut sowie ein Verfahren zur Reinigung von Reinigungsgut. Derartige Reinigungsvorrichtungen und Verfahren werden insbesondere im Bereich der gewerblichen Geschirrspültechnik eingesetzt, beispielsweise in Einkammer- oder Mehrkammer-Geschirrspülmaschinen. Derartige gewerbliche Geschirrspülmaschinen werden insbesondere in Großküchen eingesetzt, beispielsweise in Betriebskantinen, Schulen, Krankenhäusern, Pflegeeinrichtungen, Behörden oder ähnlichen Einrichtungen, in welchen innerhalb einer kurzen Zeit große Mengen an Geschirr gereinigt werden müssen. Auch andere Einsatzgebiete sind jedoch grundsätzlich möglich, also beispielsweise Einsatzgebiete in der Haushalts-Geschirrspültechnik oder Einsatzgebiete zur Reinigung anderer Arten von Reinigungsgut, beispielsweise Pflegegeschirr, Maschinenteilen, Behältern oder ähnlichen Gegenständen.

### Stand der Technik

Aus verschiedenen Gebieten der Naturwissenschaften, der Technik, der Medizintechnik oder des täglichen Lebens sind Reinigungsvorrichtungen bekannt. Im Folgenden wird insbesondere Bezug genommen auf die gewerbliche Geschirrspültechnik, ohne hierdurch mögliche andere Einsatzgebiete der beschriebenen Erfindung zu beschränken.

In der gewerblichen Geschirrspültechnik wird Geschirr in der Regel in Einkammer- oder Mehrkammer-Geschirrspülmaschinen gereinigt. Gewerbliche Geschirrspülmaschinen zeichnen sich in der Regel dadurch aus, dass mindestens zwei verschiedene Tanks für Reinigungsflüssigkeiten vorgesehen sind, in welchen die Reinigungsflüssigkeiten gleichzeitig konditioniert werden können, beispielsweise gleichzeitig temperiert und/oder auf andere Weise behandelt werden können. Im Gegensatz zu Haushalts-Geschirrspülmaschinen, welche in der Regel nur über einen Tank verfügen, führt ein derartiges Mehrtank-System zu einer erheblichen Zeitersparnis.

Eine erhebliche Problematik bei gewerblichen Geschirrspülmaschinen besteht jedoch in vielen Fällen in dem nicht unerheblichen Energieverbrauch derartiger Systeme. Diese Problematik ist beispielsweise in DE 10 2004 046 758 A1 beschrieben. So ist eine Vielzahl von Verbrauchern innerhalb der Geschirrspülmaschinen mit Energie zu versorgen, wie beispielsweise Tankheizungen, Pumpen, Gebläse, Durchlauferhitzer, Transportmotoren oder andere Verbraucher.

Bei der Verwendung von elektrischer Energie für derartige Reinigungsvorrichtungen sind jedoch verschiedene Gesichtspunkte zu beachten. Einerseits ist der Energieverbrauch als Ressource zu sehen, welche möglichst sparsam eingesetzt werden muss. Andererseits ist ein gewisser Energieverbrauch in der Regel erforderlich, beispielsweise um eine gewünschte Desinfektionswirkung aufgrund einer Wärmebeaufschlagung des Reinigungsguts zur erzielen. Weiterhin ist zu beachten, dass die Reinigungsvorrichtungen in der Regel einen Anschlusswert aufweisen, welcher insgesamt nicht überschritten werden darf. Um die benötigte Energie transportieren zu können, müssen beispielsweise Anschlüsse und Leitungen auf den maximal benötigten Bedarf ausgelegt sein. Dies betrifft sowohl Maschinen-interne Leitungen als auch bauseitig bereitgestellte Anschlüsse. Die einzelnen Funktionseinheiten der Reinigungsvorrichtung, wie beispielsweise Tanks, Klarspülung oder Trocknung bzw. deren Verbraucher, werden in der Regel einerseits mit motorischer Leistung und andererseits mit Heizleistungen bestückt. Auch andere Arten von Leistungen können erforderlich sein. Über die Gleichzeitigkeit der Verbraucher und deren Nominalwert wird der Gesamtanschlusswert der Reinigungsvorrichtung berechnet. Dieser Nominalwert und weitere Rahmenbedingungen, wie beispielsweise Häufung, Umgebungstemperatur und Entfernung werden in der Regel zur Dimensionierung der Anschlussleitung herangezogen. Je höher der Anschlussstrom ist, desto höher sind die Bereitstellungskosten des Betreibers, sowohl für die Bereitstellung der Energie wie auch der Anschlussleitung.

In DE 10 2004 046 758 A1 werden ein Verfahren und eine Vorrichtung vorgeschlagen, bei denen einer Gruppe von elektrischen Verbraucherelementen einer Spülmaschine eine maximale elektrische Gesamtleistung zugewiesen wird. Dabei werden jedem elektrischen Verbraucherelement dieser Gruppe mindestens zwei Leistungslevels zugewiesen. In einem Bedarfsermittlungsschritt wird, abhängig von einem Betriebeszustand der Geschirrspülmaschine, eine optimale Kombination von Leistungslevels gewählt, wobei für jedes Verbraucherelement das gewählte Leistungslevel dem Leistungsbedarf des Verbraucherelements im Betriebszustand der Spülmaschine angepasst ist. Die Gesamtleistung aller Verbraucherelemente überschreitet dabei die elektrische Gesamtleistung nicht.

Aus DE 10 2007 032 053 A1 sind eine Vorrichtung und ein Verfahren zur Regulierung des Stromverbrauchs eines elektrischen Geräts bekannt. Die Vorrichtung umfasst eine Lerneinrichtung und eine Steuereinrichtung. Die Lerneinrichtung erfasst über einen bestimmten Zeitraum Daten bezüglich der Benutzung des elektrischen Geräts und wertet diese Daten aus. Die Steuereinrichtung beeinflusst auf der Basis der Datenauswertung den Betrieb des elektrischen Geräts.

Diese bekannten Verfahren und Vorrichtungen bewirken bereits eine erhebliche Verbesserung des Energiemanagements komplexer Maschinen. Dennoch besteht ein erhebliches Verbesserungspotential, da die bekannten Verfahren und Vorrichtungen in der Praxis vergleichsweise unflexibel sind. So erfordert beispielsweise das in DE 10 2004 046 758 A1 beschriebene System eine vollständige Umgestaltung des Energiemanagements, sobald der Grundaufbau der Reinigungsvorrichtung geändert wird. Diese Änderung kann bereits die Hinzunahme eines einzelnen Verbrauchers beinhalten. Zudem sind die beschriebenen Verfahren und Vorrichtungen in der Regel nicht in der Lage, auf von außen vorgegebene Einflüsse flexibel zu reagieren, beispielsweise eine externe Steuerung durch ein Energiemanagement-System oder eine Einbindung in ein derartiges Energiemanagement-System, beispielsweise eine Energiemanagement-System in einem Krankenhaus. Da in derartigen komplexen Energiemanagement-Systemen, welche in der Regel eine Vielzahl von einzelnen Maschinen berücksichtigen, eine unübersichtlich hohe Anzahl möglicher Anforderungen an das Energiemanagement der einzelnen Maschinen auftreten kann, ist zudem eine Maschinensteuerung, mit einer fest vorgegebenen Anzahl von Leistungslevels in der Regel nicht geeignet, auf die Vielzahl möglicher Anforderungen angemessen zu reagieren.

### Aufgabe der Erfindung

Es ist daher eine Aufgabe der vorliegenden Erfindung, eine Reinigungsvorrichtung und ein Verfahren zur Reinigung von Reinigungsgut bereitzustellen, welche die Nachteile bekannter Verfahren und Vorrichtungen vermeiden. Insbesondere soll ein flexibles Energiemanagement bereitgestellt werden, welches auch in komplexe Energiemanagement-Systeme, beispielsweise in Krankenhäusern oder anderen größeren Einrichtungen, eingebunden werden kann.

### Offenbarung der Erfindung

Diese Aufgabe wird gelöst durch eine Reinigungsvorrichtung und ein Verfahren zur Reinigung von Reinigungsgut mit den Merkmalen der unabhängigen Patentansprüche. Vorteilhafte Weiterbildungen der Erfindung, welche einzeln oder in beliebiger Kombination realisierbar sind, sind in den abhängigen Ansprüchen dargestellt. Dabei kann die Reinigungsvorrichtung eingerichtet sein, um ein erfindungsgemäßes Verfahren durchzuführen, und das erfindungsgemäße Verfahren kann unter Verwendung einer erfindungsgemäßen Reinigungsvorrichtung durchgeführt werden. Dementsprechend kann für die möglichen Ausgestaltungen der Reinigungsvorrichtung auf die Beschreibung des Verfahrens verwiesen werden und umgekehrt. Auch andere Ausgestaltungen sind jedoch grundsätzlich möglich.

Es wird eine Reinigungsvorrichtung zur Reinigung von Reinigungsgut vorgeschlagen. Grundsätzlich kann es sich dabei, wie oben ausgeführt, bei dem Reinigungsgut um beliebige Gegenstände handeln, welche zu reinigen sind. Ohne Beschränkung weiterer möglicher Ausgestaltungen wird die Erfindung im Folgenden unter Bezugnahme auf eine bevorzugte Anwendung beschrieben, nämlich die Anwendung im Bereich der Geschirrspültechnik. Dementsprechend kann das Reinigungsgut Geschirr umfassen, also Gegenstände, welche für die Zubereitung oder Darreichung von Speisen und/oder Getränken verwendet werden und/oder mit Speisen und/oder Getränken mittelbar oder unmittelbar in Kontakt kommen können. Insbesondere kann es sich somit bei der Reinigungsvorrichtung um eine Geschirrspülmaschine handeln, insbesondere eine gewerbliche Geschirrspülmaschine, insbesondere eine Einkammer- oder Mehrkammer-Geschirrspülmaschine. Die Reinigungsvorrichtung kann zur Reinigung und/oder Desinfektion des Reinigungsguts ausgestaltet sein und kann dementsprechend ausgestaltet sein, um das Reinigungsgut mit mindestens einem Reinigungsfluid zur beaufschlagen, beispielsweise einer Flüssigkeit und/oder einem Dampf. Auch andere Arten von Reinigungsvorrichtungen sind jedoch grundsätzlich möglich, beispielsweise Reinigungsvorrichtungen, in welchen lediglich eine Desinfektion stattfindet, beispielsweise unter Einwirkung von Hitze. Verschiedene Ausgestaltungen sind möglich.

Die Reinigungsvorrichtung umfasst mindestens zwei Verbraucher. Unter einem Verbraucher ist dabei ein beliebiges Element zu verstehen, welches für den Betrieb der Reinigungsvorrichtung benötigt wird und welches mit einer Energie, insbesondere einer elektrischen Energie und/oder einer Wärmeenergie beaufschlagt werden muss. Verschiedene Ausführungsbeispiele von Verbrauchern werden unten näher erläutert.

Die Reinigungsvorrichtung umfasst mindestens eine modulare Steuerung. Unter einer Steuerung ist dabei eine elektrische, elektronische oder elektromechanische Einrichtung zu verstehen, welche eingerichtet ist, um mindestens einen Reinigungsvorgang in der Reinigungsvorrichtung zu beeinflussen. Insbesondere können ein oder mehrere Reinigungsprogramme durch die Steuerung durchführbar sein, wobei ein Reinigungsprogramm eine bestimmte Art der Reinigung des Reinigungsguts beinhaltet. Die Steuerung kann insbesondere mindestens eine Datenverarbeitungsvorrichtung umfassen.

Unter einer modularen Steuerung ist dabei im Rahmen der vorliegenden Erfindung eine Steuerung zu verstehen, welche mehrere Elemente umfasst, die zwar zusammenwirken können, welche jedoch im Wesentlichen ihre Funktionen unabhängig voneinander erfüllen können. Beispielsweise können diese Elemente dezentral angeordnet sein und/oder Funktionseinheiten und/oder Verbrauchern der Reinigungsvorrichtung zugeordnet sein. Alternativ oder zusätzlich zu einer bevorzugten dezentralen Anordnung können diese Elemente jedoch auch ganz oder teilweise in einer einzigen räumlichen Baueinheit oder in mehreren Baueinheiten zusammengefasst sein. Weiterhin können, ebenfalls alternativ oder zusätzlich, einzelne oder mehrere der genannten Elemente der modularen Steuerung ganz oder teilweise als Software-Bausteine realisiert sein. So können beispielsweise in einer denkbaren Variante einzelne oder mehrere Steuerelemente der modularen Steuerung als Programm-Teile eines übergeordneten Steuerungsprogramms realisiert sein. Diese Variation könnte sich beispielsweise ergeben, wenn die Funktionalität der modularen Steuerung vollständig oder teilweise in einer SPS oder einer vergleichbaren Installation hinterlegt wäre und zum Schalten vorzugsweise nur einfache elektronische Schalter zum Einsatz kämen. Nach wie vor soll jedoch eine funktionelle Unabhängigkeit der Elemente der modularen Steuerung im Sinne der obigen Definition bestehen.

Die modulare Steuerung umfasst eine Maschinensteuerung und mindestens ein kontaktloses Steuerelement. Unter einer Maschinensteuerung ist dabei die oberste Ebene der modularen Steuerung zu verstehen, welche beispielsweise den oder die Programmabläufe der Reinigungsvorrichtung steuert. Die Maschinensteuerung, welche für sich genommen zentral oder auch dezentral aufgebaut sein kann, kann beispielsweise eine Datenverarbeitungsvorrichtung, beispielsweise einen Computer umfassen. Weiterhin kann die Maschinensteuerung beispielsweise mindestens eine Schnittstelle für eine Interaktion mit einem Benutzer und/oder mit externen Vorrichtungen umfassen, beispielsweise mindestens einen Bildschirm, mindestens ein Bedienelement und/oder mindestens eine andere Arte von Schnittstelle.

Unter einem kontaktlosen Steuerelement ist im Rahmen der vorliegenden Erfindung eine Vorrichtung zu verstehen, welche an eine Energieversorgung angeschlossen werden kann, beispielsweise eine oder mehrere Energieversorgungsleitungen, und welche mindestens einen Ausgang aufweist, über welchen eine variable Energie bereitstellbar ist. Beispielsweise kann eine variable Leistung an dem mindestens einen Ausgang bereitstellbar sein.

Die Variabilität kann dabei insbesondere stufenlos sein, so dass beispielsweise zwischen einem Minimalwert, welcher auch Null sein kann, und einem Maximalwert, welcher beispielsweise dem Wert der Energieversorgung entspricht, stufenlos eine Ausgangsleistung bereitgestellt werden kann, was auch die Bereitstellung einer Spannung, eines Stroms oder einer anderen Art von Energie beinhalten kann. Unter stufenlos ist dabei eine variable Einstellmöglichkeit zu verstehen, bei welcher vorzugsweise keine diskreten Levels vorgegeben sind. Dementsprechend kann die Bereitstellung beispielsweise auf analoge Weise erfolgen. Alternativ kann jedoch auch eine digitale Bereitstellung erfolgen, wobei vorzugsweise die Auflösung derart hoch gewählt wird, dass über die Bandbreite der gesamten Einstellmöglichkeit vorzugsweise mindestens 5, insbesondere mindestens 10 und besonders bevorzugt mindestens 100 oder mehr Levels vorgesehen sind.

Das kontaktlose Steuerelement ist weiterhin derart ausgestaltet, dass dies über eine eigene Steuerung verfügt. Diese Steuerung soll von außen beeinflussbar sein, und entsprechend dieser Steuerung soll die bereitgestellte Ausgangsleistung des kontaktlosen Steuerelements einstellbar sein. Insbesondere kann diese Steuerung des kontaktlosen Steuerelements über eine eigene Intelligenz verfügen, beispielsweise über eine Datenverarbeitungsvorrichtung, wie beispielsweise einen Controller, insbesondere einen Mikrocontroller. Weiterhin kann die Steuerung des kontaktlosen Steuerelements mindestens ein Speicherelement umfassen, insbesondere ein flüchtiges und/oder nichtflüchtiges Speicherelement. Weiterhin kann das kontaktlose Steuerelement mindestens einen Anschluss nach außen aufweisen, insbesondere eine Schnittstelle, über welche eine Beeinflussung der Steuerung des kontaktlosen Steuerelements möglich ist. Diese Beeinflussung soll jedoch derart erfolgen, dass das kontaktlose Steuerelement auch eigenständig arbeiten kann, im Sinne des oben beschriebenen Modularitätsgedankens. Dementsprechend ist nicht ständig eine Beeinflussung des kontaktlosen Steuerelements von außen nötig, sondern das kontaktlose Steuerelement ist eingerichtet, um eigenständig eine Einstellung der bereitgestellten Leistung vorzunehmen, ohne dass hierzu zusätzliche Elemente erforderlich sind.

Wie oben dargestellt ist die Maschinensteuerung zur Durchführung mindestens eines Reinigungsprogramms eingerichtet. Das kontaktlose Steuerelement ist, wie dargestellt, eingerichtet, um mindestens einen der Verbraucher variabel mit Energie zu versorgen. Insbesondere kann das kontaktlose Steuerelement mit einer Energieversorgung verbunden sein und mindestens einen Ausgang aufweisen, an welchem die variable Energie an den mindestens einen Verbraucher bereitgestellt wird. Wie oben dargestellt, kann unter variabel insbesondere eine stufenlose Einstellbarkeit zu verstehen sein, wobei beispielsweise eine analoge oder auch fein gestufte digitale Einstellbarkeit gegeben sein kann.

Die Reinigungsvorrichtung umfasst, wie oben dargestellt, mindestens zwei Verbraucher. Dabei kann jedem der Verbraucher ein kontaktloses Steuerelement zugeordnet sein, oder lediglich einigen der Verbraucher oder einem der Verbraucher. Das kontaktlose Steuerelement kann dezentral angeordnet sein, beispielsweise am Ort des Verbrauchers. Das kontaktlose Steuerelement bildet jedoch vorzugsweise keinen Teil des Verbrauchers selbst, sondern eine eigenständige Einheit, unabhängig von der Funktionalität des Verbrauchers, welche beispielsweise einem Energieversorgungseingang des Verbrauchers vorgeschaltet sein kann. Auf diese Weise sind ein leichter Austausch der Verbraucher und/oder eine leichte Erweiterung der Reinigungseinrichtung um einen oder mehrere zusätzliche Verbraucher möglich.

Die Maschinensteuerung ist eingerichtet, um mindestens zwei verschiedene Ansteuerstrategien für die Reinigungsvorrichtung bereitzustellen. Jede Ansteuerstrategie enthält dabei Informationen über benötigte Energien der Verbraucher, das heißt aller Verbraucher der Reinigungsvorrichtung oder zumindest einiger Verbraucher der Reinigungsvorrichtung beziehungsweise mindestens eines Verbrauchers der Reinigungsvorrichtung. Unter einer Ansteuerstrategie ist also allgemein ein Plan zu verstehen, wie Energien an alle Verbraucher der Reinigungsvorrichtung oder zumindest eine Gruppe von mindestens zwei Verbrauchern der Reinigungsvorrichtung zu verteilen sind. Die mindestens zwei Ansteuerstrategien können dabei beispielsweise automatisch von der Maschinensteuerung gewählt werden, beispielsweise entsprechend eines vorgegebenen Programms der Maschinensteuerung, welche diese Ansteuerstrategien generiert, oder können auch ausgewählt werden, beispielsweise aus einer Mehrzahl von in einem Datenspeicher abgelegten Ansteuerstrategien. Die Ansteuerstrategien können auch von außen manuell oder automatisch eingestellt bzw. ausgewählt werden, beispielsweise durch einen Bediener.

Jede Ansteuerstrategie kann beispielsweise einem bestimmten Betriebszustand der Reinigungsvorrichtung entsprechen, also irgendeinem Zustand der Maschine, welcher durch einen Satz von Einstellparametern charakterisiert ist. Entsprechend können mindestens zwei verschiedene Betriebszustände vorgesehen sein, also mindestens zwei mögliche Einstellungen und/oder Verfahrensweisen der Reinigungsvorrichtung, welche beispielsweise über einen Parametersatz an Betriebsparametern definiert sind und welchen jeweils eine Ansteuerstrategie zugewiesen ist. Jede Ansteuerstrategie enthält Informationen der benötigten Energien der Verbraucher, also beispielsweise der Leistungen und/oder Spannungen und/oder Ströme, welche an die jeweiligen Verbraucher bereitzustellen sind. Diese Informationen stellen dabei noch nicht die eigentliche Leistungsbereitstellung dar, sondern sollen es dem kontaktlosen Steuerelement beziehungsweise den kontaktlosen Steuerelementen lediglich ermöglichen, die eigentliche Leistungsbereitstellung vorzunehmen. Dementsprechend können die benötigten Energien in Absolutwerten oder in relativen Einheiten angegeben werden, also in beliebigen Einheiten, welche einen Rückschluss auf die bereitzustellende
Energie an die einzelnen Verbraucher erlauben.

Die Maschinensteuerung ist eingerichtet, um den kontaktlosen Steuerelementen über mindestens ein Bus-System die Informationen über die benötigten Energien, also beispielsweise über die benötigten Spannungen und/oder Leistungen und/oder Ströme der zugehörigen Verbraucher entsprechend einer aktuell ausgewählten Ansteuerstrategie zu übermitteln. Dies bedeutet, dass aus der Mehrzahl der bereitstellbaren Ansteuerstrategien eine aktuelle Ansteuerstrategie ausgewählt wird und die benötigten Energie entsprechend dieser ausgewählten Ansteuerstrategie über das mindestens eine Bus-System an das mindestens eine kontaktlose Steuerelement übermittelt wird. Unter einem Bus-System ist dabei ein grundsätzlich beliebiges System zur Datenübertragung zwischen mehreren Teilnehmern über einen gemeinsamen Übertragungsweg zu verstehen, wobei vorzugsweise der jeweilige Teilnehmer nicht an der Datenübertragung zwischen anderen Teilnehmern beteiligt ist. Insbesondere kann das Bus-System mindestens einen CAN-Bus umfassen. Ein CAN-Bus ist ein asynchrones, serielles Bus-System, welches insbesondere für die Automobiltechnologie entwickelt wurde. Grundsätzlich können jedoch auch andere Arten von Bus-Systemen, insbesondere Feldbus-Systeme, eingesetzt werden. Das Bus-System kann vorzugsweise vollständig hardwareimplementiert sein, indem eine oder mehrere feste oder variable Verbindungsleitungen oder sonstige physikalische Verbindungen verwendet werden, beispielsweise drahtlose Verbindungen. Alternativ oder zusätzlich kann das Bus-System jedoch auch ganz oder teilweise softwareimplementiert sein und ganz oder teilweise durch ein oder mehrere Softwareprogramme ersetzt werden.

Die Maschinensteuerung wählt also eine Ansteuerstrategie aus und übermittelt über das mindestens eine Bus-System die Informationen über die jeweiligen benötigten Energien der zugehörigen Verbraucher an das mindestens eine kontaktlose Steuerelement. Beispielsweise kann, wie oben dargestellt, jedem Verbraucher oder einer Gruppe von Verbrauchern jeweils ein kontaktloses Steuerelement zugeordnet sein. Vorzugsweise ist eine Eins-zu-Eins-Zuordnung gegeben, also eine Zuordnung, bei welcher der mindestens eine Verbraucher genau ein kontaktloses Steuerelement aufweist. Dabei können die Informationen über die benötigten Energien dieses Verbrauchers allen kontaktlosen Steuerelementen zur Verfügung gestellt werden, oder jeweils nur dem kontaktlosen Steuerelement des jeweiligen Verbrauchers.

Das kontaktlose Steuerelement ist eingerichtet, um entsprechend dieser Information mindestens einen zugehörigen Verbraucher mit der jeweiligen benötigten Energie zu beaufschlagen, also beispielsweise mit einer benötigten Spannung und/oder einer benötigten Leistung. Unter einem zugehörigen Verbraucher ist dabei mindestens ein Verbraucher zu verstehen, welcher dem kontaktlosen Steuerelement zugeordnet ist, beispielsweise durch eine entsprechende Verdrahtung mit mindestens einem Energieversorgungsdraht. Auch eine andere Verbindung zur Bereitstellung der benötigten Energie ist denkbar.

Zusammenfassend kann die Ausgestaltung der Reinigungsvorrichtung also derart sein, dass eine Gruppe von Verbrauchern vorgesehen ist. Mindestens einem dieser Verbraucher, vorzugsweise mehreren Verbrauchern, ist dabei jeweils mindestens ein kontaktloses Steuerelement zugeordnet. Die Maschinensteuerung, welche eingerichtet ist, um mindestens zwei verschiedene Ansteuerstrategien für die Reinigungsvorrichtung bereitzustellen, wählt eine Ansteuerstrategie aus und übermittelt über das Bus-System die Informationen über die benötigten Energien der zugehörigen Verbraucher an das mindestens eine kontaktlose Steuerelement. Entsprechend sorgt das kontaktlose Steuerelement dafür, dass die benötigte Energie an die jeweiligen zugehörigen Verbraucher bereitgestellt wird.

Die Ansteuerstrategien können dabei derart ausgestaltet sein, dass eine vorgegebene maximale Gesamtleistung der Reinigungsvorrichtung oder einer Gruppe von Verbrauchern der Reinigungsvorrichtung nicht überschritten wird. Diese maximale Gesamtleistung kann fest vorgegeben sein, kann jedoch auch variabel sein. Die maximale Gesamtleistung kann beispielsweise fest in der Reinigungsvorrichtung, beispielsweise der modularen Steuerung, insbesondere der Maschinensteuerung, gespeichert sein, kann jedoch auch von außen vorgegeben werden, beispielsweise über eine Schnittstelle an die Maschinensteuerung. Diese Möglichkeit, die maximale Gesamtleistung von außen vorzugeben, ermöglicht oder begünstigt auch die Einbindung der Reinigungsvorrichtung in ein komplexeres System mit mehreren Vorrichtungen, beispielsweise in ein Energiemanagement-System, beispielsweise in einem Krankenhaus, einer Pflegeeinrichtung, einer Kantine in einem Betrieb, einer Behörde oder ähnlichem.

Wie oben dargestellt, können die kontaktlosen Steuerelemente mit mindestens einer Energieversorgung verbunden sein, um entsprechend der von der Maschinensteuerung bereitgestellten ausgewählten Ansteuerstrategie, beziehungsweise den in dieser Ansteuerstrategie enthaltenen Informationen über die benötigten Energien des zugehörigen Verbrauchers, eine Energie einzustellen, mit welcher der jeweilige zugehörige Verbraucher beaufschlagt wird. Das mindestens eine kontaktlose Steuerelement kann dabei grundsätzlich eine beliebige Vorrichtung umfassen, welche in der Lage ist, die Anforderungen der genannten Art zu erfüllen. Insbesondere kann das kontaktlose Steuerelement eine oder mehrere der folgenden Vorrichtungen umfassen: einen Thyristor; einen Triac; ein stufenloses elektronisches Relais.

Die Verbraucher der Reinigungsvorrichtung können, wie oben dargestellt, verschiedenartig ausgestaltet sein. Insbesondere können die Verbraucher eines oder mehrere der folgenden Elemente der Reinigungsvorrichtung umfassen: ein Heizelement; einen Antrieb einer Transportvorrichtung zum Transportieren von Reinigungsgut durch die Reinigungsvorrichtung; einen Motor, insbesondere einen Pumpenmotor und/oder Gebläsemotor; eine Wärmepumpe; einen Dampferzeuger; ein Ventil, insbesondere ein Proportionalventil. Das mindestens eine Heizelement kann beispielsweise mindestens eine Tankheizung umfassen und/oder mindestens einen Durchlauferhitzer und/oder mindestens einen Boiler. Das mindestens eine Ventil, insbesondere das Proportionalventil, kann beispielsweise einen Zufluss mindestens eines Mediums, beispielsweise eines Dampfs und/oder einer Flüssigkeit, steuern.

Das mindestens eine kontaktlose Steuerelement, vorzugsweise die mehreren kontaktlosen Steuerelemente, können insbesondere, wie oben dargestellt, über eine eigene Intelligenz verfügen. Dementsprechend kann jedes kontaktlose Steuerelement jeweils mindestens einen Ansteuer-Controller umfassen. Unter einem Ansteuer-Controller ist dabei grundsätzlich eine Datenverarbeitungsvorrichtung zu verstehen, welche in der Lage ist, beispielsweise durch eine entsprechende programmtechnische Einrichtung, entsprechend den Informationen über die benötigten Energien verschiedene Ansteuerschemata zur Bereitstellung der benötigten Energien zu bestimmen.

Unter einem Ansteuerschema kann dabei ein Befehlssatz und/oder ein Parametersatz verstanden werden, welcher von dem kontaktlosen Steuerelement genutzt wird, um die benötigte Energie, welche diesem Befehlssatz und/oder Parametersatz entspricht, bereitzustellen. Beispielsweise kann diese mindestens eine Spannung sein, mit welcher ein Thyristor und/oder Triac und/oder ein elektronisches Relais angesteuert wird, um die benötigte Energie bereitzustellen. Während eine Ansteuerstrategie, also grundsätzlich lediglich Informationen über die benötigten Energien der einzelnen Verbraucher beziehungsweise des mindestens einen Verbrauchers beinhaltet, stellt also das Ansteuerschema die konkrete technische Umsetzung dar, mittels derer über das mindestens eine kontaktlose Steuerelement die jeweils benötigte Energie bereitgestellt wird.

Die konkrete Ausgestaltung der Ansteuerschemata hängt von der technischen Realisierung des kontaktlosen Steuerelements ab. Beispielsweise kann ein Ansteuerschema, wie oben dargestellt, einen Befehlssatz und/oder einen Parametersatz, beispielsweise Spannungen oder ähnliches, beinhalten. Insbesondere können die Ansteuerschemata eingerichtet sein, um die benötigten Energien mittels eines stufenlos einstellbaren Verfahrens, beispielsweise mittels einer Impuls-Pause-Variation und/oder mittels einer Phasenanschnittvariation und/oder mit einer Puls-Weiten-Modulation, einzustellen.

Unter einer Impuls-Pause-Variation, welche häufig auch als Puls-Pausen-Modulation bezeichnet wird, ist ein Kodierungsverfahren für analoge Werte zu verstehen. Dabei wird eine analoge Größe in Form einer Pausendauer zwischen zwei Impulsen kodiert. Die Pulse können insbesondere von gleicher Höhe und gleicher Dauer sein. Eine zeitliche fixe Abtastrate ist hierbei nicht erforderlich.

Unter einer Phasenanschnittsteuerung ist ein Verfahren zur Leistungssteuerung eines elektrischen Verbrauchers zu verstehen, wobei die elektrische Leistung in Form einer Wechselspannung bereitgestellt wird. Insbesondere kann eine Phasenansschnittsteuerung durch einen Triac, also ein Element mit einer Antiparallelschaltung mindestens zweier Thyristoren, gesteuert werden. Bei der Phasenanschnittsteuerung wird der Strom nach einem Nulldurchgang der Wechselspannung verzögert eingeschaltet und liegt dann in der Regel bis zum nächsten Nulldurchgang an. Alternativ kann auch eine Phasenabschnittsteuerung verwendet werden, wobei ein Strom nach dem Nulldurchgang sofort eingeschaltet wird und noch vor dem nächsten Nulldurchgang ausgeschaltet wird. Dies soll ebenfalls vom Begriff der Phasenanschnittsteuerung umfasst sein.

Im Rahmen der vorliegenden Erfindung kann dabei unter einer Puls-Weiten-Modulation ein Verfahren zur Leistungssteuerung eines oder mehrerer elektrischer Verbraucher verstanden werden, bei welchem eine technische Größe, beispielsweise ein elektrischer Strom, zwischen zwei Werten wechselt. Dabei wird ein Tastverhältnis bei konstanter Frequenz variiert. Die resultierende technische Größe kann dann insbesondere dem arithmetischen Mittelwert und damit der mittleren Höhe der Fläche unter der modulierten Größe entsprechen.

Ein Vorteil der genannten Steuerungs- und/oder Modulationsarten liegt darin, dass stufenlos Energien bereitgestellt werden können, beispielsweise stufenlos Leistungen, so dass eine flexible Steuerung und eine flexible Reaktion auf vorgegebene Ansteuerstrategien möglich ist, auch auf Ansteuerstrategien, zu welchen bislang noch keine Ansteuerschemata bekannt sind.

Die kontaktlosen Steuerelemente können eingerichtet sein, um die Ansteuerschemata selbständig zu bestimmen, beispielsweise mittels eines entsprechenden Programms, welches auf dem Ansteuer-Controller abläuft. Alternativ oder zusätzlich können die kontaktlosen Steuerelemente jedoch auch mindestens einen Speicher mit einer Mehrzahl hinterlegter Ansteuerschemata aufweisen, wobei jedes Ansteuerschema einer benötigten Energiemenge entspricht.

Oben wurde bereits dargestellt, dass eine Ansteuerstrategie beispielsweise einem Betriebszustand entsprechen kann. Dabei bezeichnet die Ansteuerstrategie jedoch die an die einzelnen Verbraucher beziehungsweise eine Gruppe von Verbrauchern der Reinigungsvorrichtung bereitzustellenden Energien, wohingegen der Betriebszustand den tatsächlich hierdurch herbeigeführten Zustand (gegebenenfalls nach Verstreichen einer Einstellzeit) der Reinigungsvorrichtung beziehungsweise einzelner Elemente der Reinigungsvorrichtung bezeichnet. Der Betriebszustand kann insbesondere definiert sein durch eine oder mehrere der folgenden Parameter: eine Betriebsart der Reinigungsvorrichtung (beispielsweise einen Vorspülbetrieb, einen Hauptspülbetrieb, einen Klarspülbetrieb oder einen Trocknungsbetrieb), ein Reinigungsprogramm (beispielsweise eine Intensivreinigung, eine normale Reinigung oder ein Spar-Reinigungsprogramm), eine Beladung mit Reinigungsgut (beispielsweise entsprechend einer leichten Beladung, einer mittleren Beladung oder einer schweren Beladung oder einer Art von Reinigungsgut), eine von außen zur Verfügung stehende Leistung, insbesondere eine zur Verfügung stehende Gesamtleistung; eine spezielle Hardware-Ausstattung der Reinigungsvorrichtung oder Kombinationen der genannten und/oder anderer Parameter.

Wie oben dargestellt, können die Ansteuerstrategien die Informationen über die benötigten Energien der Verbraucher auf unterschiedliche Weisen beinhalten, beispielsweise in absoluten oder in relativen Einheiten. Diese Informationen können dabei jeweils auch eine Bedeutung in erkennbarer oder kodierter Form umfassen, beispielsweise einen oder mehrere der folgenden Parameter: eine Solltemperatur, insbesondere eine Solltemperatur eines Reinigungsfluids und/oder eine Tanktemperatur; eine Menge an Reinigungsfluid, insbesondere eine Wassermenge und/oder eine Menge eines Dampfs; eine Transportgeschwindigkeit eines Transports von Reinigungsgut durch die Reinigungsvorrichtung; eine Beladung der Reinigungsvorrichtung mit Reinigungsgut; eine Abluftmenge.

Die Reinigungsvorrichtung kann weiterhin derart ausgestaltet sein, dass die modulare Steuerung mindestens eine Leistungserfassungseinheit umfasst. Diese Leistungserfassungseinheit kann beispielsweise über das Bus-System mit der Maschinensteuerung verbunden sein. Die Leistungserfassungseinheit kann dabei eingerichtet sein, um eine von der Reinigungsvorrichtung aufgenommene Leistung, insbesondere eine Gesamtleistung, zu erfassen. Die Leistungserfassungseinheit kann insbesondere konfigurierbar sein, das heißt von außen beeinflussbar sein, beispielsweise über mindestens eine Schnittstelle, insbesondere über eine Benutzerschnittstelle und/oder eine Schnittstelle zur Maschinensteuerung, beispielsweise über das Bus-System.

Die Leistungserfassungseinheit kann insbesondere mindestens eine Sicherheitsfunktion aufweisen. Dementsprechend kann die Leistungserfassungseinheit insbesondere eingerichtet sein, um die Reinigungsvorrichtung in einen sicheren Zustand zu überführen, wenn die erfasste aufgenommene Leistung einen vorgegebenen oder vorgebbaren Maximalwert überschreitet. Die Vorgabe dieses Maximalwerts kann beispielsweise ein Teil der möglichen Konfiguration der Leistungserfassungseinheit sein. Beispielsweise kann dieser Maximalwert ein Maximalwert für die von der Reinigungsvorrichtung aufgenommene Leistung sein. Dabei kann es sich um die gesamte von der Reinigungsvorrichtung aufgenommene Leistung handeln oder lediglich einen Teil der aufgenommenen Leistung, welcher separat erfassbar ist, beispielsweise einen Teil für eine bestimmte Gruppe von Verbrauchern der Reinigungsvorrichtung.

Der sichere Zustand kann beispielsweise eine Funktion mit einem vorgegebenen Minimalleistungsniveau für alle oder einige Verbraucher umfassen. Alternativ oder zusätzlich kann der sichere Zustand jedoch auch beispielsweise ein Not-Aus umfassen, beispielsweise eine Rückführung der aufgenommenen Leistung auf Null oder ein vorgegebenes Minimalleistungsniveau. Dementsprechend können beispielsweise im Rahmen der Sicherheitsfunktion einzelne oder alle Verbraucher abgeschaltet werden. Zu diesem Zweck kann die Leistungserfassungseinheit beispielsweise mit einem Not-Aus-Kreis der Reinigungsvorrichtung verbunden sein, so dass beispielsweise ein Ausgang der Leistungserfassungseinheit die gesamte Reinigungsvorrichtung abschalten kann, ohne einen Eingriff in die Funktion der Reinigungsvorrichtung zu erfordern. Dementsprechend kann die Leistungserfassungseinheit beispielsweise den sicheren Zustand unter Umgehung der Maschinensteuerung herbeiführen, beispielsweise über den Not-Aus-Kreis. Die Leistungserfassungseinheit und/oder deren Not-Aus-Funktion können auch redundant ausgeführt sein, beispielsweise durch eine doppelte Hardware der Leistungserfassungseinheit selbst oder durch Kombination mit zusätzlichen Leitungsschutzelementen, beispielsweise Leitungsschutzschaltern wie beispielsweise Sicherungen. Dementsprechend kann beispielsweise eine zweikanalige Ausgestaltung vorliegen.

Die Maschinensteuerung kann auch eingerichtet sein, um mindestens einen Lernmodus durchzuführen. In diesem Lernmodus wird mindestens ein Element der Reinigungsvorrichtung, insbesondere mindestens ein Verbraucher und/oder ein Aktor, angesteuert. Die Maschinensteuerung ist dabei eingerichtet, um die dabei von der Leistungserfassungseinheit erfasste Leistung zu speichern. Diese gespeicherte Leistung kann beispielsweise bei der Erstellung mindestens einer Ansteuerstrategie eine Rolle spielen. So kann beispielsweise die Maschinensteuerung aus den gespeicherten Leistungen eine Ansteuerstrategie zusammenstellen, wobei beispielsweise für eine vorgegebene Maximalleistung und/oder einen Betriebeszustand ein Leistungsschema erstellt wird, wobei die gewünschten Funktionen der Reinigungsvorrichtung erfüllt werden, wobei jedoch gleichzeitig beispielsweise ein vorgegebener Maximalwert der aufgenommenen Leistung nicht überschritten wird. Derartige Lernprogramme sind grundsätzlich bekannt, beispielsweise aus der oben zitierten DE 10 2007 032 053 A1, wobei derartige Programme nun im Rahmen der modularen Steuerung der Reinigungsvorrichtung eingesetzt werden können, um eigenständig Ansteuerschemata zu erstellen. Alternativ oder zusätzlich können jedoch diese Ansteuerschemata, wie oben dargestellt, auch ganz oder teilweise manuell erstellt und beispielsweise gespeichert werden. Die Verwendung der gespeicherten Leistungen aus dem Lernmodus stellt eine besonders effiziente Möglichkeit dar, um auf die tatsächlichen Gegebenheiten der Reinigungsvorrichtung zu reagieren und entsprechend angepasste und realistische Ansteuerstrategien zu erstellen.

Die mindestens eine Leistungserfassungseinheit kann darüber hinaus, alternativ oder zusätzlich, für weitere Zwecke eingesetzt werden. So kann die Maschinensteuerung beispielsweise eingerichtet sein, um aus der von der Leistungserfassungseinheit erfassten Leistung und/oder einer Änderung der erfassten Leistung, beispielsweise einer zeitlichen Änderung über einen vorgegebenen Zeitraum hinweg, auf mindestens einen Zustand mindestens eines Elements der Reinigungsvorrichtung, insbesondere mindestens eines Verbrauchers und/oder eines Aktors, zu schließen. Auf diese Weise kann beispielsweise auf einen Verschleiß eines bestimmten Elements der Reinigungsvorrichtung und/oder eine Verkalkung eines Elements geschlossen werden und/oder auf eine andere Art der Degradation dieses Elements.

Wie oben bereits angedeutet, können die Ansteuerstrategien auf unterschiedliche Weisen ausgestaltet sein. Insbesondere können diese Ansteuerstrategien Informationen über eine Energieverteilung auf die Verbraucher oder eine oder mehrere Gruppen von Verbrauchern der Reinigungsvorrichtung beinhalten. Dabei kann auch mindestens eine der Ansteuerstrategien eingerichtet sein, um mindestens eine Funktionsgruppe der Reinigungsvorrichtung einzuschalten oder abzuschalten. Eine Funktionsgruppe ist dabei ein Teil der Reinigungsvorrichtung, welcher eine Mehrzahl von Elementen der Reinigungsvorrichtung umfasst, insbesondere eine Mehrzahl von Verbrauchern und/oder Aktoren. Beispiele von Funktionsgruppen sind bestimmte Reinigungsstationen und/oder bestimmte Trocknungen und/oder bestimmte Bereitstellungseinrichtungen von Reinigungsfluiden, beispielsweise Dampf und/oder Spülflüssigkeit. So kann beispielsweise ein Boiler oder ein Durchlauferhitzer vollständig abgeschaltet werden.

Ein besonderer Vorteil des modularen Aufbaus der Steuerung der Reinigungsvorrichtung besteht darin, dass die modulare Steuerung in ein externes Energiemanagement-System eingebunden werden kann und/oder mit einem derartigen Energiemanagement-System in Wechselwirkung treten kann, beispielsweise unidirektional oder bidirektional. Dementsprechend kann die modulare Steuerung, insbesondere die Maschinensteuerung, eingerichtet sein, um mit einem externen Energiemanagement-System in Wechselwirkung zu treten, insbesondere in eine bidirektionale Wechselwirkung. Dementsprechend kann die Maschinensteuerung eingerichtet sein, um entsprechend dieser Wechselwirkung eine Ansteuerstrategie bereitzustellen, beispielsweise aus einer Mehrzahl aus Ansteuerstrategien auszuwählen und/oder eigenständig zu erzeugen. Eine eigenständige Erzeugung kann beispielsweise darin bestehen, dass eine von dem Energiemanagement-System vorgegebene Maximalleistung der Reinigungsvorrichtung in eine Leistungsaufnahme einzelner Elemente, beispielsweise einzelner Verbraucher, der Reinigungsvorrichtung umgelegt wird, beispielsweise nach einem vorgegebenen Schlüssel. Auch komplexere oder andere Algorithmen zum Erzeugen der Ansteuerstrategie sind denkbar. Die modulare Steuerung kann somit beispielsweise unidirektional von dem Energiemanagement-System mit Vorgaben beaufschlagt werden und/oder die modulare Steuerung, beispielsweise die Maschinensteuerung, kann bei dem Energiemanagement-System anfragen, um bestimmte Vorgaben zu erhalten, beispielsweise eine Maximalleistung. Die modulare Steuerung kann beispielsweise mindestens ein Kommunikationsmodul umfassen, um mit dem Energiemanagement-System in Wechselwirkung zu treten.

Neben der Reinigungsvorrichtung in einer oder mehreren der oben beschriebenen Ausgestaltungen wird weiterhin ein Verfahren zur Steuerung einer Reinigungsvorrichtung zur Reinigung von Reinigungsgut beschrieben. Insbesondere kann das Verfahren unter Verwendung einer Reinigungsvorrichtung gemäß einer oder mehreren der oben beschriebenen Ausgestaltungen durchgeführt werden. Dementsprechend kann für optionale Ausgestaltungen auf die obige Beschreibung verwiesen werden. Die Reinigungsvorrichtung umfasst mindestens zwei Verbraucher. Die Reinigungsvorrichtung umfasst weiterhin eine modulare Steuerung mit einer Maschinensteuerung und mindestens einem kontaktlosen Steuerelement. Die Maschinensteuerung kann mindestens ein Reinigungsprogramm durchführen, und das kontaktlose Steuerelement kann mindestens einen der Verbraucher variabel mit Energie versorgen. Die Maschinensteuerung ist eingerichtet, um mindestens zwei verschiedene Ansteuerstrategien für die Reinigungsvorrichtung bereitzustellen. Jede Ansteuerstrategie umfasst dabei Informationen über benötigte Energien der Verbraucher. Die Maschinensteuerung übermittelt den kontaktlosen Steuerelementen über ein Bus-System Informationen über die benötigten Energien der zugehörigen Verbraucher entsprechend einer ausgewählten Ansteuerstrategie, wobei das kontaktlose Steuerelement mindestens einen zugehörigen Verbraucher mit der jeweiligen benötigten Energie beaufschlagt. Für weitere mögliche Ausgestaltungen und Definitionen kann auf die obige Beschreibung verwiesen werden.

Die oben beschriebene Reinigungsvorrichtung und das Verfahren weisen gegenüber bekannten Vorrichtungen und Verfahren dieser Art eine Vielzahl von Vorteilen auf. So folgt der dargelegte Ansatz dem Prinzip, dass durch eine Skalierung/Variation an den Reinigungsvorrichtungen bestimmte Maschinenelemente, wie beispielsweise ein oder mehrere Waschtanks, eine Klarspülung, eine oder mehrere Trocknungen oder ähnliche Elemente oder Ausbaustufen von Maschinenelementen speziell unter Betrachtung von Heiz- und Motorleistung der Maschinensteuerung zugeordnet werden können. Diese sind dabei nicht alle gemäß der installierten Leistung oder durch das vorgegebene Verfahren bestimmt oder zu einem Zeitpunkt in vollem Umfang benötigt. So können beispielsweise Heizelemente über kontaktlose Steuerelemente angesteuert werden. Die Maschinensteuerung kann diese kontaktlosen Steuerelemente über das Bus-System, beispielsweise den CAN-Bus, mit Informationen über den benötigten Energiefluss versorgen. Dabei können die kontaktlosen Steuerelemente derart ausgestaltet werden, dass dort hinterlegte Ansteuerschemata, beispielsweise Impuls-Pause-Variationen oder Phasenanschnittkombinationen oder Puls-Weiten- Modulationen verwendet werden, mit denen der Bedarf an Energie, je nach geforderter Leistung, beispielsweise Heizleistung, und Anwendungsfall optimal zugeführt werden kann. Dabei können auch mehrere Prinzipien auf dem kontaktlosen Steuerelement abgelegt werden und speziell nach Bedarf ausgewählt werden, beispielsweise über das Bus-System. Anwendungsfälle können die Heizleistung für die Erwärmung des Tankwassers, das Klarspülwasser und/oder die Trocknung sein. Die in der Maschinensteuerung bereitgestellten Ansteuerstrategien, aus denen eine Ansteuerstrategie ausgewählt wird, beispielsweise entsprechend einem gewünschten Betriebszustand und/oder einem Waschprogramm und/oder einem Verfahren und/oder einer Maschinenskalierung und/oder äußeren Vorgaben, kommunizieren über das Bus-System, beispielsweise den CAN-Bus, mit den kontaktlosen Steuerelementen. Dies kann derart erfolgen, dass sowohl ein Zustand von Reglern wie auch ein Verfahren und/oder eine Skalierung der Reinigungsvorrichtung selbst die Höhe der notwendigen Leistung bestimmt. Herkömmliche Steuerelemente, wie beispielsweise Schütze oder einfache kontaktlose Schaltelemente, können dieser intelligenten Kommunikation von Maschinensteuerung und variabler Energieübertragung, mittels mindestens eines intelligenten kontaktlosen Steuerelements, nicht folgen. Die Ansteuerstrategien können komplette Leistungsschemata umfassen, welche in der Maschinensteuerung abgelegt oder in der Maschinensteuerung generiert werden können. Die Reinigungsvorrichtung ist damit, was beispielsweise deren Aktoren und deren Energiebedarf betrifft, elektronisch skalierbar. Es wäre dementsprechend auch möglich, eine Reinigungsvorrichtung, entsprechend der Ansteuerstrategien, vor Ort zu skalieren, beispielsweise entsprechend den Bedürfnissen und mit hinterlegten Ansteuerstrategien.

Die Ansteuerstrategien können damit optimal abgestimmt werden, beispielsweise auf eine Betriebsart, ein Waschprogramm, eine Beladung, auf eine zur Verfügung stehende Leistung oder eine Hardware. Die Ansteuerstrategien können Parameter beinhalten, wie beispielsweise Solltemperaturen, Wassermengen, Geschwindigkeiten oder Beladung der Reinigungsvorrichtung. Die Beladung kann unter bestimmten Umständen wesentliche Einflüsse auf den Energiebedarf der Reinigungsvorrichtung haben. Die Leistungsschemata, die vom Hersteller vorgegeben werden können, bilden durch ihre definierten Rahmenbedingungen in der Regel die Sicherheit für einen hygienisch oder sicherheitstechnisch einwandfreien Prozess. So kann beispielsweise durch eine entsprechende Auswahl einer Ansteuerstrategie eine vorgegebene Wirkung erzielt werden, beispielsweise eine Reinigungs- und/oder Desinfektionswirkung. Dies kann beispielsweise nach dem Sinnerschen Kreis erfolgen, also einem Wirkmechanismus, mit dem Reinigungsabläufe organisiert und durchgeführt werden können. Dabei können Reinigungsfaktoren der Reinigungsvorrichtung, wie die Chemie, die Mechanik, die Temperatur und die Zeit, insbesondere die Einwirkzeit, aufeinander abgestimmt werden, so dass eine vorgegebene Reinigungswirkung erzielt wird. Dabei können beispielsweise entsprechend einer Ansteuerstrategie ein oder mehrere der genannten Faktoren zugunsten anderer Faktoren zurückgefahren werden oder umgekehrt. Beispielsweise können schwächere Chemikalien oder geringer konzentrierte Chemikalien verwendet werden, wobei gleichzeitig eine Einwirkzeit erhöht wird. Andererseits kann beispielsweise eine Heizleistung reduziert werden, bei gleichzeitig höherer Chemikaliendosierung, beispielsweise höherer Dosierung an Reinigungskonzentrat. Auf diese Weise können vom Hersteller Ansteuerstrategien vorgegeben werden, die durch ihre definierten Rahmenbedingungen die Sicherheit für einen hygienisch oder sicherheitstechnisch einwandfreien Prozess gewährleisten.

Unter Beachtung dieser Parameter in den Leistungsschemata, einerseits statisch und andererseits dynamisch, lassen sich die einzelnen kontaktlosen Steuerelemente bei nicht benötigter oder nur teilweise benötigter Verbraucherleistung, beispielsweise Heizleistung, in den vorhandenen Ansteuerstrategien zu- oder abschalten. Die sich dadurch ergebende Leistungsreserve kann mittels der Maschinensteuerung und der ausgewählten Ansteuerstrategie abgeglichen und entsprechend dem Bedarf, beispielsweise anderen Verbrauchern beziehungsweise kontaktlosen Steuerungen, zugeordnet werden und/oder vollständig eingespart werden. Weiterhin ist es beispielsweise möglich, durch geeignete Auswahl eines Ansteuerschemas, beispielsweise durch eine geeignete Impuls-Pause-Variation und/oder Phasenanschnittkombination, über das Ansteuerschema, beispielsweise ein hinterlegtes Ansteuerschema, Energie zeitversetzt an die entsprechenden Funktionseinheiten, insbesondere die Verbraucher, zu bringen. Dadurch kann gewährleistet werden, dass die Gesamtleistung, die unter anderem von außen vorgegeben werden kann, nicht überschritten wird.

Die Gesamtleistung kann durch die Leistungserfassungseinheit gemessen werden, beispielsweise an zentraler Stelle. Die Leistungserfassungseinheit kann beispielsweise mit der Maschinensteuerung, insbesondere einer zentralen Recheneinheit der Maschinensteuerung, über das Bus-System, beispielsweise den CAN-Bus, verbunden sein. Die Leistungserfassungseinheit kann somit Informationen liefern, beispielsweise über eine aktuelle aus dem Netz aufgenommene Leistung. Die über die kontaktlosen Steuerelemente vorgegebene Leistung oder auch andere, beispielsweise motorische Leistungen, spiegeln sich in diesem Messwert wieder und können zu einer Überwachung der maximal zur Verfügung stehenden Leistung wie aber auch einer Steuerung der möglichen Leistung eingesetzt werden. Die Leistungserfassungseinheit kann dabei in verschiedenen Modi betrieben werden. Einerseits lässt sich in einem Betriebsmodus die insgesamt aufgenommene Leistung erfassen. Andererseits können in einer Art Lernmodus einzelne Aktoren von der Maschinensteuerung angesteuert und der aus der Leistungserfassungseinheit über das Bus-System erfasste Messwert in der Steuerung zur späteren Verwendung abgespeichert werden. Die so ermittelte Datenbasis für die Verbraucher, wie beispielsweise Motoren, Heizleistungen, Aktoren aber auch für komplette Einheiten, kann für verschiedene Zwecke verwendet werden. Die Messwerte ermöglichen beispielsweise eine vorausschauende Erstellung von Energieanforderungen für die verschiedenen Betriebsarten, Programme oder Skalierungen, welche sich in den Ansteuerstrategien wiederfinden können und/oder welche zur Erstellung der Ansteuerstrategien genutzt werden können. Alternativ oder zusätzlich kann eine geeignete Datenbasis für ökonomische Berechnungen und/oder Auswertungsstrategien kostengünstig zur Verfügung gestellt werden.

Weiterhin ist es, alternativ oder zusätzlich, auch möglich über eine eventuell geänderte Leistungsaufnahme Rückschlüsse auf eine Verschlechterung bestimmter Elemente zu ziehen, beispielsweise einen Verschleiß und/oder eine Verkalkung. Bekanntermaßen benötigen beispielsweise verkalkte Heizelemente zur Erhitzung der Wassermenge mehr Zeit als nicht verkalkte Elemente. So deuten Änderungen bei der Leistungsaufnahme beispielsweise bei Pumpenmotoren auf eine Veränderung an hydraulischen Elementen hin. Beispielsweise können auf diese Weise blockierte Düsen und/oder fehlende Waschsysteme detektiert werden und/oder Veränderungen an Pumpenlaufrädern erkannte werden. Bekannte Ansätze messen einerseits die verbrauchte Energie direkt an den Aktoren oder gehen von einem mit externen Messgeräten oder theoretisch ermittelten Wert aus. Im ersten Fall lässt sich eine Detektion von Verschlechterungen aufgrund jeweils eines benötigten Erfassungssystems pro Aktor nur vergleichsweise aufwändig realisieren. Im zweiten und im dritten genannten Fall ist eine Veränderung beziehungsweise Verschlechterung der Elemente während der Laufzeit, hervorgerufen wie oben beschrieben, nicht oder nur schwerlich feststellbar. Mittels des vorgeschlagenen Systems mit der entsprechenden Leistungserfassungseinheit und der Maschinensteuerung lässt sich hingegen eine derartige Diagnose leicht realisieren.

Die modulare Steuerung, insbesondere die Maschinensteuerung und/oder deren Datenverarbeitungsvorrichtung, kann somit eingerichtet sein, um die zur Verfügung stehende Leistung optimal auf den im Prozess benötigten Bedarf und die physikalisch vorhandenen Rahmenbedingungen anzupassen. Dabei kann die Anpassung derart erfolgen, dass die definierte maximale Leistung, welche beispielsweise durch eine Installationstechnik und/oder eine Energieoptimierungsanlage vorgegeben sein kann, nicht überschritten wird. Diese Funktion kann insbesondere durch die in der modularen Steuerung integrierte Leistungsmessung mittels der Leistungserfassungseinheit realisiert werden.

Mittels der vorgeschlagenen Ansteuerstrategien können ganze Funktionsgruppen zu- oder abgeschaltet werden. Es ist jedoch auch möglich, dem Prozess reduzierte Verbraucherleistungen, beispielsweise Heizleistungen, insbesondere durch Impuls-Pause-Variationen und/oder Phasenanschnittkombinationen, aufzuprägen. Dies kann beispielsweise dergestalt realisiert werden, dass spezielle Waschprogramme und/oder Skalierungen die Funktionseinheiten und/oder eine oder mehrere der vorhandenen Funktionseinheiten der Reinigungsvorrichtung nicht oder nur teilweise mit Energie versorgen. Bei einer geeigneten Ausrüstung der Maschinenelemente und/oder der Vorgabe der Ansteuerstrategien können dadurch Maschinenelemente modular vorgefertigt werden und/oder vor Ort, zumindest in gewissem Umfang, elektronisch an den Leistungsbedarf angepasst und/oder skaliert werden.

Ein weiterer Ansatz, welcher im Rahmen der oben beschriebenen Reinigungsvorrichtung realisiert werden kann, ist es, zumindest in gewissem Umfang, gemäß dem Sinnerschen Kreis, eine Gewichtung der einzelnen Verbraucher umzuverteilen, ohne hierdurch eine Reinigungswirkung wesentlich zu beeinflussen. So kann beispielsweise bei nicht vorhandener Heizleistung oder lediglich geringfügig vorhandener Heizleistung beziehungsweise geringfügig vorhandener Energie über eine Transportgeschwindigkeit Einfluss auf eine Einwirkzeit genommen werden. Somit können beispielsweise, zumindest innerhalb eines gewissen Umfangs, bei reduzierten Solltemperaturen und damit reduzierter erforderlicher Heizleistung dieselben Reinigungseffekte und/oder Desinfektionswirkungen erreicht werden, beispielsweise dieselbe Anzahl an Wärme-Äquivalenten. Der Sinnersche Kreis stellt dabei, wie oben dargestellt, ein Erklärungsmodell dar, bei welchem, beispielsweise bei der Reinigung von Geschirr vier Faktoren eine wesentliche Rolle spielen, nämlich Chemie, Mechanik, Temperatur und Einwirkzeit. Diese Faktoren werden beim Sinnerschen Kreis in Form eines Kreisdiagramms dargestellt. Gemäß diesem Ansatz können Temperaturen und somit Heizleistung beziehungsweise Transportgeschwindigkeit und somit Einwirkzeit innerhalb eines gewissen Rahmens umverteilt werden, ohne hierdurch das Reinigungsergebnis zu verändern. Diese Umverteilung kann im Rahmen der flexiblen Ansteuerstrategie mit Hilfe der unterschiedlichen Ansteuerschemata auf einfache Weise realisiert werden.

Die Steuerung bietet weiterhin, wie oben dargestellt, die Möglichkeit, mit externen Energie-Management-Systemen in Wechselwirkung zu treten, beispielsweise mit externen Energieoptimierungsanlagen. So bietet die Reinigungsvorrichtung beispielsweise die Möglichkeit, von übergeordneten Energieoptimierungsanlagen maximale Leistungsanforderungen entgegenzunehmen. Mittels der oben dargelegten Erfindung ist es möglich, optimal die vorhandenen Ressourcen zuzuordnen. Dies kann beispielsweise durch ein intelligentes Zu- und/oder Abschalten der Leistung einzelner Verbraucher erfolgen. Frühere Ansätze schalten hingegen die Leistung in der Regel bedingungslos ab, ohne auf beispielsweise hygienerelevante Anforderungen der Reinigungsvorrichtung Rücksicht zu nehmen. Die intelligente Abstimmung mit einem externen Energiemanagement-System, beispielsweise einer Energieoptimierungsanlage, ermöglicht hingegen beispielsweise eine Integration der Reinigungsvorrichtung, beispielsweise einer Geschirrspülmaschine, in ein Gesamtsystem eines externen Energiemanagement-Systems, beispielsweise in ein Gesamtsystem einer Energiebereitstellung eines Hauses. Diese Integration kann gleichzeitig betriebswirtschaftlich und unter Einhaltung sämtlicher hygienerelevanter Vorschriften erfolgen. So kann beispielsweise die Steuerung auf Rückfrage mit einem Betreiber und/oder Küchenchef bei reduzierter Energieverfügbarkeit entweder eine andere Ansteuerstrategie auswählen oder die Anforderung der Leistungsreduzierung gegenüber der übergeordneten Energieoptimierungsanlage beispielsweise auch ablehnen.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Kombination mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche beziehungsweise hinsichtlich ihrer Funktionen einander entsprechende Elemente.

Im Einzelnen zeigen:
- Figur 1: ein Ausführungsbeispiel einer modularen Steuerung;
- Figur 2: ein Ausführungsbeispiel eines kontaktlosen Steuerelements; und
- Figur 3: ein Ausführungsbeispiel einer erfindungsgemäßen Reinigungsvorrichtung.

### Ausführungsbeispiele

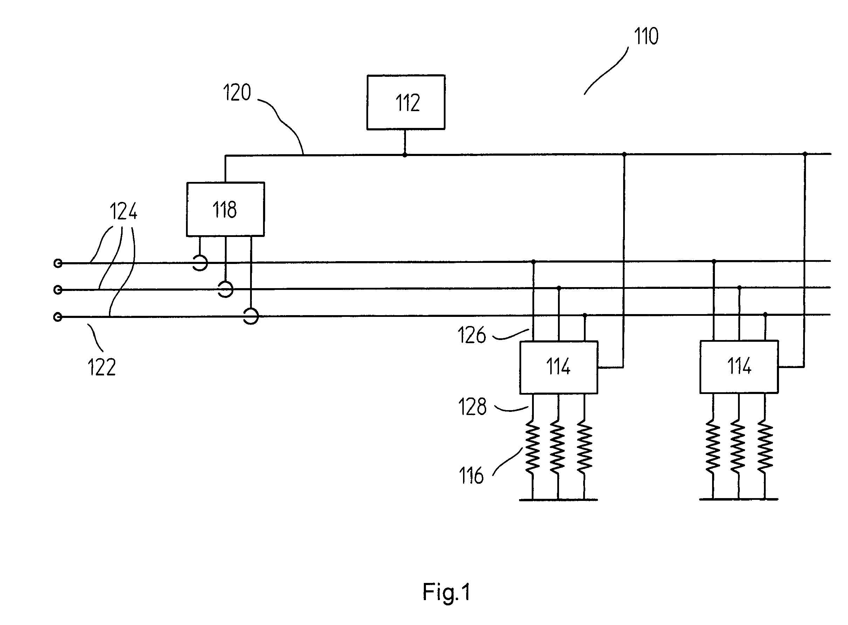

In Figur 1 ist ein Ausführungsbeispiel einer modularen Steuerung 110 für den Einsatz in einer Reinigungsvorrichtung dargestellt. Die modulare Steuerung 110 umfasst eine Maschinensteuerung 112, welche beispielsweise eine Datenverarbeitungsvorrichtung und/oder mindestens einen elektronischen Speicher umfassen kann. Weiterhin umfasst die modulare Steuerung 110 in dem dargestellten Ausführungsbeispiel eine Mehrzahl von kontaktlosen Steuerelementen 114, welche in dem dargestellten Ausführungsbeispiel jeweils einem oder mehreren angedeuteten Verbrauchern 116 zugeordnet sind. Die Verbraucher 116 sind dabei in der Regel nicht selbst Teil der modularen Steuerung 110.

Weiterhin umfasst die modulare Steuerung 110 in dem dargestellten Ausführungsbeispiel eine Leistungserfassungseinheit 118. Die Leistungserfassungseinheit 118, die Maschinensteuerung 112 und die kontaktlosen Steuerelemente 114 sind über ein Bus-System 120, welches in diesem Ausführungsbeispiel insbesondere als CAN-Bus ausgestaltet sein kann, verbunden.

Wie oben bereits ausgeführt, kann das Bus-System 120 ganz oder teilweise hardwareimplementiert sein, beispielsweise als CAN-Bus. Alternativ oder zusätzlich kann dieses jedoch grundsätzlich auch auf ein Minimum reduziert sein oder sogar auch ganz oder teilweise virtuell, d.h. softwareimplementiert ausgestaltet werden. So kann dieses Bus-System 120 beispielsweise in einer einfachen Verbindung bestehen.

Dementsprechend können die Elemente der modularen Steuerung 110 ganz oder teilweise dezentral, also an verschiedenen Orten angeordnet sein. Alternativ oder zusätzlich können, wie oben ausgeführt, auch mehrere oder sogar alle Elemente der modularen Steuerung, beispielsweise die Maschinensteuerung 112 und die kontaktlosen Steuerelemente 114 und optional die Leistungserfassungseinheit 118, in einer Umgebung zusammengefasst werden, beispielsweise auf einer Platine, wobei jedoch nach wie vor eine funktionelle Unabhängigkeit dieser Elemente im Sinne des oben beschriebenen Modularitätsgedankens erhalten bleiben soll. Weiterhin können die Elemente der modularen Steuerung 110, beispielsweise die Maschinensteuerung 112 und die kontaktlosen Steuerelemente 114 und optional die Leistungserfassungseinheit 118, ganz oder teilweise, einzeln oder zu mehreren oder sogar insgesamt, alternativ zu einer bevorzugten reinen Hardwareimplementierung, auch softwareimplementiert ausgestaltet werden, beispielsweise als Module eines übergeordneten Programms.

Weiterhin ist in Figur 1 in dem dargestellten Ausführungsbeispiel eine Energieversorgung 122 angedeutet. Diese Energieversorgung 122 kann beispielsweise eine zentrale Energieversorgung einer Reinigungsvorrichtung sein und ist nicht notwendigerweise Bestandteil der modularen Steuerung 110. Die Energieversorgung 122 ist in dem dargestellten Ausführungsbeispiel mit einer Mehrzahl von Energieversorgungsleitungen 124 ausgestattet, beispielsweise drei Energieversorgungsleitungen 124, welche in Figur 1 mit L1, L2 und L3 bezeichnet sind.

Über die Leistungserfassungseinheit 118 kann beispielsweise eine von der Reinigungsvorrichtung aufgenommene Leistung, insbesondere eine Gesamtleistung, die über die Energieversorgung 122 bereitgestellt wird, erfasst werden. Es sei darauf hingewiesen, dass die Leistungserfassungseinheit 118 auch lediglich einen Teil der Energieversorgung 122 überwachen kann, beispielsweise lediglich einen Teil der Energieversorgungsleitungen 124. Die Überwachung kann beispielsweise mittels dem Fachmann bekannter Strom- und/oder Spannungsmesser erfolgen.

Die kontaktlosen Steuerelemente 114 können jeweils einen oder mehrere Eingänge 126 aufweisen, welche mit der Energieversorgung 122, beispielsweise mit einer, mehreren oder allen der Energieversorgungsleitungen 124, verbunden sind. Auf diese Weise kann an die kontaktlosen Steuerelemente 114 eine Energie bereitgestellt werden, beispielsweise eine maximal verfügbare Energie. Der Begriff der Energie umfasst dabei im Rahmen der vorliegenden Erfindung auch den Begriff einer Leistung. Die kontaktlosen Steuerelemente 114 sind eingerichtet, um an die Verbraucher 116 variabel über einen oder mehrere Ausgänge 128 eine benötigte Energie bereitzustellen.

Über das Bus-System 120 erhält jedes kontaktlose Steuerelement 114 von der Maschinensteuerung mindestens eine Information über die benötigte Energie der zugehörigen Verbraucher 116. Die variable Bereitstellung der Energie an den Ausgängen 128 erfolgt entsprechend dieser mindestens einen Information.

Es sei darauf hingewiesen, dass die modulare Steuerung in Figur 1 lediglich stark schematisiert dargestellt ist. Es können ein, zwei oder mehrere kontaktlose Steuerelemente 114 vorgesehen sein. Weitere optionale Steuerelement und/oder Eingabe-/Ausgabe-Einheiten sind in Figur 1 nicht dargestellt. Weiterhin sind die Verbraucher 116 in Figur 1 symbolisch als Heizelemente ausgestaltet. Auch eine andere Ausgestaltung der Verbraucher 116 ist jedoch grundsätzlich alternativ oder zusätzlich möglich.

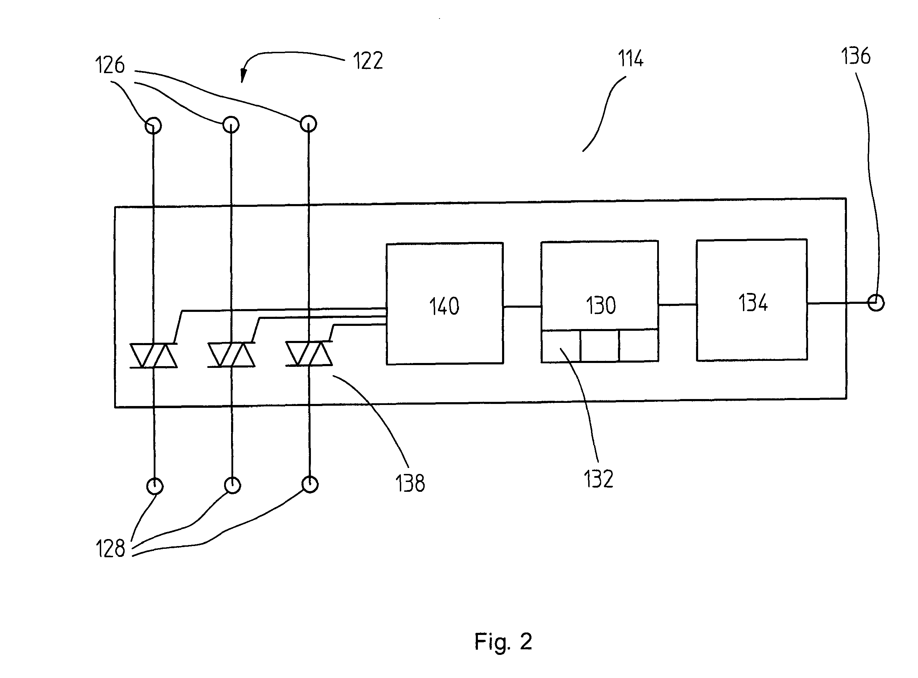

In Figur 2 ist schematisiert ein Ausführungsbeispiel eines kontaktlosen Steuerelements 114 dargestellt, wie es beispielsweise in dem Ausführungsbeispiel der modularen Steuerung 110 gemäß Figur 1 eingesetzt werden könnte. Auch in anderen Ausführungsbeispielen ist das kontaktlose Steuerelement 114 jedoch einsetzbar oder es könnten andere Arten von kontaktlosen Steuerelemente 114 in dem Ausführungsbeispiel der modularen Steuerung 110 gemäß Figur 1 eingesetzt werden.

Das kontaktlose Steuerelement 114 in Figur 2 umfasst vorzugsweise eine eigene Intelligenz. Diese ist in diesem Ausführungsbeispiel durch einen Ansteuer-Controller 130 realisiert, beispielsweise einen Ansteuer-Controller 130 mit einer Datenverarbeitungsvorrichtung wie beispielsweise einem Mikro-Computer. Das kontaktlose Steuerelement 114 kann weiterhin einen oder mehrere Datenspeicher 132 umfassen, welche beispielsweise, wie in Figur 2 angedeutet, Teil des Ansteuer-Controllers 130 sein können. In diesem Datenspeicher 132 können beispielsweise ein oder mehrere Ansteuerschemata hinterlegt sein, wie unten noch näher ausgeführt wird.

Mit dem Ansteuer-Controller 130 kann ein Kommunikationsbaustein 134 verbunden sein, welcher wiederum mit einem Anschluss 136 zur Verbindung mit dem Bus-System 120 (in Figur 2 nicht dargestellt) verbunden sein kann.

Weiterhin weist das kontaktlose Steuerelement 114 mindestens einen Eingang 126 und mindestens einen Ausgang 128 auf. Der Eingang 126, wobei in dem dargestellten Ausführungsbeispiel exemplarisch drei Eingänge, beispielsweise zur Verbindung mit den Energieversorgungsleitungen 124, vorgesehen sind, kann allgemein mit der Energieversorgung 122 verbunden sein. Der Ausgang 128 kann mit einem oder mehreren dem kontaktlosen Steuerelement 114 zugeordneten und in Figur 2 nicht dargestellten Verbrauchern 116 verbunden sein.

Weiterhin umfasst das kontaktlose Steuerelement 114 vorzugsweise in diesem oder auch in anderen Ausführungsbeispielen ein oder mehrere variable Einstellelemente, mittels derer eine an dem Eingang 126 bereitgestellte Eingangsenergie auf (was auch eine Eingangsleistung umfassen kann) in eine an dem Ausgang 128 bereitzustellende Ausgangsenergie (was auch eine Ausgangsleistung beinhalten kann) umgewandelt werden können. Beispielsweise kann es sich bei diesen variablen Einstellelementen 138 um elektronische Schalter handeln, welche vorzugsweise stufenlos einstellbar sind. Beispielsweise handelt es sich bei diesen elektronischen Schaltern um so genannte Triacs, also Halbleiterbauelemente, welche eine Antiparallelschaltung von zwei Thyristoren umfassen. Alternativ oder zusätzlich sind jedoch auch andere Arten variabler Einstellelemente beziehungsweise elektronische Schalter einsetzbar. Auch eine Kombination verschiedener Arten variabler Einstellelemente 138 ist möglich.

Die variablen Einstellelemente 138 können unmittelbar durch den Ansteuer-Controller 130 angesteuert werden oder, wie in Figur 2 angedeutet, durch eine zusätzliche und optionale interne Ansteuerelektronik 140. Diese interne Ansteuerelektronik 140 kann beispielsweise Steuersignale für die variablen Einstellelemente 138 bereitstellen, beispielsweise entsprechende Spannungen zum Steuern der Triacs.

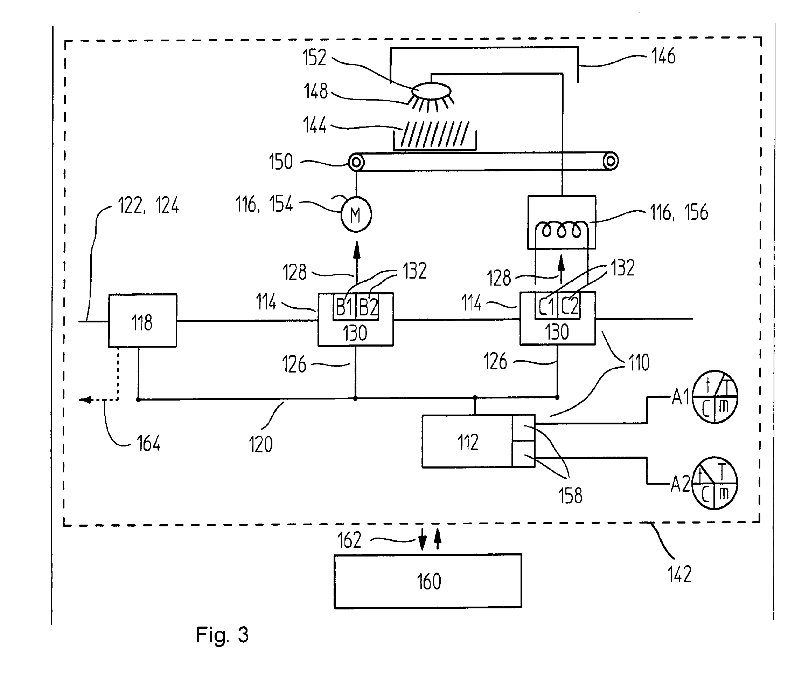

In Figur 3 ist schließlich ein Ausführungsbeispiel einer Reinigungsvorrichtung 142 zur Reinigung von Reinigungsgut 144 dargestellt. Die Reinigungsvorrichtung 142 ist dabei lediglich stark schematisiert gezeigt. Beispielsweise kann es sich bei dem Reinigungsgut 144 um Geschirr handeln, wie in Figur 3 angedeutet. Das Reinigungsgut 144 kann beispielsweise in mindestens einer Reinigungskammer 146 mit einem Reinigungsfluid 148 beaufschlagt werden. Dabei können eine oder mehrere Reinigungskammern 146 vorgesehen sein. Im dargestellten Ausführungsbeispiel ist exemplarisch eine Durchlauf-Geschirrspülmaschine gezeigt, bei welcher das Reinigungsgut 144 mittels einer Transportvorrichtung 150 durch die eine oder mehreren Reinigungskammern 146 transportiert wird. Dabei können, wie in Figur 3 angedeutet, ein oder mehrere Reinigungssysteme 152 vorgesehen sein, beispielsweise Sprühdüsensysteme. Alternativ oder zusätzlich sind jedoch auch andere Arten von Reinigungssystemen 152 denkbar, beispielsweise Dampfreinigungssysteme oder Reinigungssysteme, in welchen allgemein eine Reinigung und/oder Desinfektion stattfindet, wobei auch eine rein thermische Desinfektion unter den Begriff der Reinigung fallen soll.

Weiterhin umfasst die Reinigungsvorrichtung 142 wieder eine modulare Steuerung 110 mit einer Maschinensteuerung 112 und kontaktlosen Steuerelementen 114 sowie einem Bus-System 120 und einer optionalen Leistungserfassungseinheit 118. Für mögliche Ausgestaltungen der modularen Steuerung 110 kann beispielsweise auf die Beschreibung der obigen Ausführungsbeispiele in den Figuren 1 und 2 verwiesen werden, wobei jedoch auch eine andere Ausgestaltung der modularen Steuerung 110 grundsätzlich möglich ist.

Die Reinigungsvorrichtung 142 umfasst eine Mehrzahl von Verbrauchern 116. Dabei können alle oder lediglich einige dieser Verbraucher 116 auf die im Folgenden beschriebene Weise angesteuert werden, das heißt in die modulare Steuerung 110 eingebunden sein. Daneben können optional ein oder mehrere Verbraucher 116 vorgesehen sein, welche auf konventionelle Weise angesteuert werden, ohne Verwendung des erfindungsgemäßen Verfahrens.

Die Verbraucher 116 sollen wiederum über eine Energieversorgung 122 mit einer benötigten Energie versorgt werden. Zu diesem Zweck sind wiederum die kontaktlosen Steuerelemente 114 vorgesehen, welche an ihren Ausgängen 128 variabel Energien an diese Verbraucher 116 bereitstellen können.

Exemplarisch sind in Figur 3 zwei Verbraucher 116 gezeigt, nämlich ein Antrieb 154 der Transportvorrichtung 150, beispielsweise ein Motor, und ein Heizelement 156. Alternativ oder zusätzlich können jedoch andere Arten von Verbrauchern 116 vorgesehen sein, wobei exemplarisch auf die obige Beschreibung verwiesen werden kann.

Die Maschinensteuerung ist eingerichtet, um mindestens zwei, vorzugsweise mehr als zwei, verschiedene Ansteuerstrategien bereitzustellen. Diese Ansteuerstrategien sind in Figur 3 symbolisch mit A₁ und A₂ bezeichnet. Die Bereitstellung kann beispielsweise durch eine unmittelbare Generierung dieser Ansteuerstrategien erfolgen und/oder dadurch, dass, wie in Figur 3 angedeutet, mehrere Ansteuerstrategien in einem Datenspeicher 158 hinterlegt sind. Der Datenspeicher 158 kann Bestandteil der Maschinensteuerung 112 sein oder kann auch an anderer Stelle in der Reinigungsvorrichtung 142, insbesondere der modularen Steuerung 110, angeordnet sein. Die Maschinensteuerung 112 ist eingerichtet, um aus der Mehrzahl der Ansteuerstrategien eine Ansteuerstrategie auszuwählen, welche aktuell verwendet werden soll. Beispielsweise kann diese Auswahl manuell durch einen Benutzer erfolgen, beispielsweise über eine in Figur 3 nicht dargestellte optionale Benutzerschnittstelle. Alternativ oder zusätzlich kann die Auswahl jedoch auch optional über eine Wechselwirkung mit den externen Energiemanagement-System 160 erfolgen, beispielsweise über eine Schnittstelle 162. Wie oben dargestellt, kann auf diese Weise beispielsweise die Reinigungsvorrichtung 142 in eine übergeordnete Energieoptimierungsanlage eingebunden werden. Das externe Energiemanagement-System kann beispielsweise der Reinigungsvorrichtung 142 eine maximal zur Verfügung stehende Gesamtleistung, beispielsweise eine Gesamtleistung für die Energieversorgung 122, übermitteln. Entsprechend dieser übermittelten zur Verfügung stehenden Gesamtleistung kann beispielsweise die Maschinensteuerung 112 eine Ansteuerstrategie auswählen.

In diesem und auch in anderen Ausführungsbeispielen kann die Maschinensteuerung 112 beispielsweise derart eingerichtet sein, dass eine insgesamt von der Reinigungsvorrichtung 142 aufgenommene Gesamtleistung verändert wird, eine Reinigungswirkung der Reinigung des Reinigungsguts 144 jedoch gleich bleibt. Dies kann, wie in Figur 3 angedeutet, insbesondere unter Verwendung des so genannten Sinnerschen Kreises erfolgen, welcher den Zusammenhang zwischen verschiedenen Reinigungsfaktoren angibt. Diese Reinigungsfaktoren sind in Figur 3 symbolisch gezeigt. Sie umfassen die in Figur 3 symbolisch mit dem Buchstaben C bezeichnete Chemie, also beispielsweise eine Art und/oder Konzentration eines Reinigungsmittels und/oder eines anderen chemischen Hilfsstoffs in dem Reinigungsfluid 148 (wobei auch mehrere Reinigungsfluide 148 vorgesehen sein können), die in Figur 3 symbolisch mit dem Buchstaben m bezeichnete mechanische Einwirkung auf das Reinigungsgut, welche beispielsweise durch eine Ausgestaltung eines Reinigungsstrahls, welcher auf dem Reinigungsgut 144 auftrifft, beeinflusst werden kann, die Temperatur T des Reinigungsfluids 148 sowie die Einwirkzeit t der Reinigung auf das Reinigungsgut 144.

Es sei darauf hingewiesen, dass diese Darstellung stark vereinfacht ist und lediglich der Verdeutlichung eines Ausführungsbeispiels der Erfindung dient. Bei komplexeren Reinigungsvorrichtungen 142 können auch mehrere Faktoren in jedem Segment des Sinnerschen Kreises vorgesehen sein. Beispielsweise können mehrere Reinigungsfluide 148 vorgesehen sein, welche jeweils eine unterschiedliche Art und/oder Konzentration an Chemie enthalten können. Weiterhin können die mehreren Reinigungsfluide und/oder auch andere Arten von Reinigungsmedien auch unterschiedliche Temperaturen T aufweisen. Entsprechend kann auch die Einwirkung mechanischer Art mehrfach unterschiedlich ausgestaltet sein, beispielsweise indem in mehreren Kammern und/oder Reinigungssystemen 152 der Reinigungsvorrichtung 142 unterschiedliche mechanische Einwirkungen erfolgen. Entsprechend dieser unterschiedlichen Arten mehrerer Einwirkungen können auch mehrere Zeitdauern t dieser Einwirkungen vorgesehen sein. Dem Fachmann ist es jedoch ohne Weiteres möglich, insbesondere durch Messungen, zu ermitteln, inwiefern diese Segmente der Sinnerschen Kreise zusammenwirken und inwiefern beispielsweise ein Einflussfaktor beziehungsweise ein Segment des Sinnerschen Kreises erhöht werden muss, wenn ein oder mehrere andere Segmente erniedrigt werden. Dies kann beispielsweise durch Messungen einer Reinigungswirkung erfolgen, beispielsweise einer optischen Reinigungswirkung und/oder einer hygienischen Reinigungswirkung. Letztere kann beispielsweise durch Abklatschuntersuchungen und/oder andere mikrobiologische Verfahren ermittelt werden. Auch andere Verfahren zur Messung der Reinigungswirkung können alternativ oder zusätzlich eingesetzt werden.

In Figur 3 sind diese Vorgänge symbolisch durch die beiden Ansteuerstrategien A₁ und A₂ dargestellt. Dabei sei angenommen, dass diese Ansteuerstrategien A₁ und A₂ eine gleiche oder zumindest im Rahmen einer tolerierbaren Abweichung ähnliche Reinigungswirkung erzielen. Es können jedoch auch Ansteuerstrategien mit unterschiedlichen Reinigungswirkungen alternativ oder zusätzlich vorgesehen sein. Die Ansteuerstrategien A₁ und A₂ unterscheiden sich beispielsweise dadurch, dass bei der Ansteuerstrategie A₁ eine geringere Temperatur gewählt wird, beispielsweise eine geringere Temperatur des Reinigungsfluids 148, wohingegen die Einwirkzeit t erhöht ist. In der Ansteuerstrategie A₂ ist hingegen die Einwirkzeit t geringer, wohingegen die Temperatur erhöht ist. Die Reinigungswirkung beider Ansteuerstrategien A₁ und A₂ kann dabei gleich sein, wobei die Reinigungswirkung beispielsweise durch ein Reinigung- und/oder Desinfektionsergebnis des gereinigten Reinigungsguts 144 überprüft werden kann. Beispielsweise kann dies durch Abklatschuntersuchungen des Reinigungsguts 144 erfolgen. Derartige Untersuchungen sind dem Fachmann grundsätzlich bekannt.

Die Maschinensteuerung 112 kann beispielsweise ausgestaltet sein, um entsprechend einer zur Verfügung stehenden Gesamtleistung zunächst die Reinigungsvorrichtung 142 der mit A₂ bezeichneten Ansteuerstrategie zu betreiben. Diese Ansteuerstrategie A₂ beinhaltet eine kurze Einwirkzeit t₂, was beispielsweise durch eine hohe Transportgeschwindigkeit der Transportvorrichtung 150 realisiert werden kann, welche beispielsweise als Korbtransportvorrichtung (wie in Figur 3 dargestellt) oder als Bandtransportvorrichtung ausgestaltet sein kann. Entsprechend ist ein hoher Durchsatz an Reinigungsgut 144 gegeben.

Erhält die Maschinensteuerung 112 dann beispielsweise die Vorgabe, dass die Gesamtleistung reduziert werden muss, wobei die Reinigungswirkung vorzugsweise gleich bleiben soll, so kann die Maschinensteuerung 112 dann beispielsweise die Ansteuerstrategie A₁ auswählen. Diese Ansteuerstrategie A₁ fährt die Temperatureinwirkung zurück, wobei, um ein gleichbleibendes Reinigungsergebnis zu erzielen, die Einwirkzeit t erhöht werden kann. Dies kann beispielsweise durch eine langsamere Transportgeschwindigkeit der Transportvorrichtung 150 realisiert werden.

Die optionale Wechselwirkung der Maschinensteuerung 112 mit dem externen Energiemanagement-System 160 kann unidirektional oder auch bidirektional erfolgen. Unidirektional kann beispielsweise lediglich eine Vorgabe an die Maschinensteuerung 112 übermittelt werden. Bidirektional kann beispielsweise eine Anfrage durch die Maschinensteuerung 112 bei dem externen Energiemanagement-System erfolgen, um beispielsweise Rahmenbedingungen, insbesondere zur Verfügung stehende Gesamtleistungen, zu erfragen. Auch andere Ausgestaltungen sind möglich.

Weiterhin sei darauf hingewiesen, dass die beiden dargestellten Ausführungsbeispiele der Ansteuerstrategien A₁ und A₂ lediglich eines von vielen Beispielen der Wahl dieser Ansteuerstrategien zeigen. So können auch weitere Ansteuerstrategien vorgesehen sein, beispielsweise Ansteuerstrategien A₃, A₄, usw. Weiterhin erfolgt in dem dargestellten Ausführungsbeispiel exemplarisch lediglich eine Wechselwirkung zwischen den Sinnerschen Faktoren t und T. Alternativ oder zusätzlich kann jedoch optional auch eine Wechselwirkung mit den übrigen Faktoren und/oder zwischen den übrigen Faktoren erfolgen, wobei eine nahezu beliebige Auswahl mindestens zweier dieser Faktoren, welche miteinander wechselwirken können, möglich ist. So kann beispielsweise eine niedrigere Temperatur und damit ein niedrigerer Energiebedarf der Maschine durch eine höhere Konzentration eines Reinigers (also eine Beeinflussung des Faktors C) ausgeglichen werden. Diese Beeinflussung kann beispielsweise durch mindestens eine Ventilsteuerung mindestens eines Dosierventils erfolgen. Verschiedene Ausgestaltungen sind möglich. Entsprechend der ausgewählten Ansteuerstrategie übermittelt die Maschinensteuerung 112 über das Bus-System 120 an eines oder mehrere der kontaktlosen Steuerelemente 114 Informationen über die benötigten Energien der zugehörigen Verbraucher 116. Dabei können alle oder lediglich ausgewählte Informationen gezielt an die zugehörigen kontaktlosen Steuerelemente 114 übermittelt werden, oder alle kontaktlosen Steuerelemente 114 können sämtliche Informationen gemeinsam erhalten. Verschiedene Ausgestaltungen sind möglich.

Die kontaktlosen Steuerelemente sind eingerichtet, um entsprechend der übermittelten Informationen die zugehörigen Verbraucher 116 mit der jeweils für die ausgewählte Ansteuerstrategie benötigten Energie zu beaufschlagen. Diese Beaufschlagung kann dauerhaft oder auch lediglich zeitweise erfolgen. Zu diesem Zweck können die kontaktlosen Steuerelemente beispielsweise eingerichtet sein, um Ansteuerschemata zur Bereitstellung der benötigten Energien zu bestimmen. Diese Ansteuerschemata können beispielsweise durch die Ansteuer-Controller 130 generiert werden. Beispielsweise können die Ansteuerschemata aus einem Datenspeicher 132 ausgewählt werden und/oder auch unmittelbar generiert werden. Die Ansteuerschemata sind exemplarisch in Figur 3 mit B₁ und B₂ beziehungsweise C₁ und C₂ bezeichnet. Zusätzlich können jeweils optional weitere Ansteuerschemata vorgesehen sein, beispielsweise B₃, B₄, usw. bzw. C₃, C₄, usw. Beispielsweise kann jeweils ein Ansteuerschema einer Ansteuerstrategie zugeordnet sein. Beispielsweise kann, wie oben erläutert, bei der Ansteuerstrategie A₂ das kontaktlose Steuerelement 114, welches dem Heizelement 156 zugeordnet ist, ein Ansteuerschema C₂ auswählen, bei welchem das Heizelement 156, beispielsweise durch eine entsprechende Einstellung eines Triacs, mit einer hohen Heizleistung beaufschlagt wird. Gleichzeitig kann das im Antrieb 154 zugeordnete kontaktlose Steuerelement 114 ein Ansteuerschema B₂ auswählen, welches den Antrieb 154 ebenfalls mit einer hohen Leistung bzw. einer daraus resultierende höheren Geschwindigkeit beaufschlagt.

Wird dann, wie oben beschrieben, die Ansteuerstrategie A₁ ausgewählt, so können die kontaktlosen Steuerelemente 114 entsprechend die Ansteuerschemata B₁ beziehungsweise C₁ auswählen, in welchen der Antrieb 154 mit einer niedrigeren Leistung bzw. einer daraus resultierenden niedrigeren Geschwindigkeit beaufschlagt wird (entsprechend einer höheren Durchlaufzeit t), ebenso wie das Heizelement 156 mit einer geringeren Heizleistung beaufschlagt wird (entsprechend einer niedrigeren Einwirktemperatur T). Wie oben dargestellt, stellt dies jedoch nur ein mögliches Ausführungsbeispiel der Veränderung von Ansteuerschemata dar. Aufgrund der Beschreibung lassen sich weitere Ausführungsbeispiele für den Fachmann leicht erschließen.

Weiterhin ist in Figur 3 wiederum die Leistungserfassungseinheit 118 dargestellt, welche eingerichtet ist, um eine von der Reinigungsvorrichtung 142 aufgenommene Leistung, beispielsweise einen Teil der Gesamtleistung oder die Gesamtleistung, zu erfassen. Übersteigt die aufgenommene Leistung einen vorgegebenen Maximalwert, so kann die Leistungserfassungseinheit 118 beispielsweise eingerichtet sein, um mindestens eine Sicherheitsfunktion auszuüben, beispielsweise um einen Not-Aus zu betätigen. Dies ist in Figur 3 durch den gestrichelten Pfeil mit der Bezugsziffer 164 angedeutet.

Weiterhin kann die Leistungserfassungseinheit 118 auch genutzt werden, um einen Lernmodus durchzuführen. So kann die modulare Steuerung 110 beispielsweise in dem Lernmodus bestimmte Verbraucher 116 ansteuern und den Einfluss auf die Leistungsaufnahme experimentell testen. Dies kann in die Generierung der Ansteuerschemata und/oder Ansteuerstrategien einfließen.

### Bezugszeichenliste

- 110: modulare Steuerung
- 112: Maschinensteuerung
- 114: kontaktlose Steuerelemente
- 116: Verbraucher
- 118: Leistungserfassungseinheit
- 120: Bus-System
- 122: Energieversorgung
- 124: Energieversorgungsleitungen
- 126: Eingang
- 128: Ausgang
- 130: Ansteuer-Controller
- 132: Datenspeicher
- 134: Kommunikationsbaustein
- 136: Anschluss für Bus-System
- 138: variable Einstellelemente
- 140: interne Ansteuerelektronik
- 142: Reinigungsvorrichtung
- 144: Reinigungsgut
- 146: Reinigungskammer
- 148: Reinigungsfluid
- 150: Transportvorrichtung
- 152: Reinigungssysteme
- 154: Antrieb
- 156: Heizelement
- 158: Datenspeicher
- 160: externes Energiemanagement-System
- 162: Schnittstelle
- 164: Not-Aus

## Patentansprüche

1. Reinigungsvorrichtung (142) zur Reinigung von Reinigungsgut (144), wobei die Reinigungsvorrichtung (142) mindestens zwei Verbraucher (116) umfasst, wobei die Reinigungsvorrichtung (142) eine modulare Steuerung (110) umfasst, wobei die modulare Steuerung (110) eine Maschinensteuerung (112) und mindestens ein kontaktloses Steuerelement (114) umfasst, wobei die Maschinensteuerung (112) zur Durchführung mindestens eines Reinigungsprogramms eingerichtet ist, wobei das kontaktlose Steuerelement (114) eingerichtet ist, um mindestens einen der Verbraucher (116) variabel mit Energie zu versorgen, wobei die Maschinensteuerung (112) eingerichtet ist, um mindestens zwei verschiedene Ansteuerstrategien für die Reinigungsvorrichtung (142) bereitzustellen, wobei jede Ansteuerstrategie Informationen über benötigten Energien der Verbraucher (116) umfasst, wobei die Maschinensteuerung (112) eingerichtet ist, um dem kontaktlosen Steuerelement (114) über mindestens ein Bus-System (120) Informationen über die benötigten Energien der zugehörigen Verbraucher (116) entsprechend einer ausgewählten Ansteuerstrategie zu übermitteln, wobei das kontaktlose Steuerelement (114) eingerichtet ist, um mindestens einen zugehörigen Verbraucher (116) mit der jeweiligen benötigten Energie zu beaufschlagen.

2. Reinigungsvorrichtung (142) nach dem vorhergehenden Anspruch, wobei die Ansteuerstrategien derart ausgestaltet sind, dass eine vorgebbare maximale Gesamtleistung nicht überschritten wird.

3. Reinigungsvorrichtung (142) nach einem der vorhergehenden Ansprüche, wobei die kontaktlosen Steuerelemente (114) eine oder mehrere der folgenden Vorrichtungen umfassen: einen Thyristor; einen Triac; ein stufenloses elektronisches Relais.

4. Reinigungsvorrichtung (142) nach einem der vorhergehenden Ansprüche, wobei die Verbraucher (116) eines oder mehrere der folgenden Elemente der Reinigungsvorrichtung (142) umfassen: ein Heizelement (156); einen Antrieb (154) einer Transportvorrichtung (150) zum Transportieren von Reinigungsgut (144) durch die Reinigungsvorrichtung (142); einen Motor, insbesondere einen Pumpenmotor und/oder einen Gebläsemotor; eine Wärmepumpe; einen Dampferzeuger; ein Ventil, insbesondere ein Proportionalventil.

5. Reinigungsvorrichtung (142) nach einem der vorhergehenden Ansprüche, wobei das kontaktlose Steuerelement (114) jeweils mindestens einen Ansteuer-Controller (130) umfasst, wobei der Ansteuer-Controller (130) eingerichtet ist, um entsprechend der Informationen über die benötigten Energien Ansteuerschemata zur Bereitstellung der benötigten Energien zu bestimmen.

6. Reinigungsvorrichtung (142) nach dem vorhergehenden Anspruch, wobei die Ansteuerschemata eingerichtet sind, um die benötigten Energien mittels Impuls-Pausevariation und/oder Phasenanschnittvariation und/oder Puls-Weiten-Modulation einzustellen.

7. Reinigungsvorrichtung (142) nach einem der beiden vorhergehenden Ansprüche, wobei das kontaktlose Steuerelement (114) mindestens einen Speicher (132) mit einer Mehrzahl hinterlegter Ansteuerschemata aufweist, wobei jedes Ansteuerschema einer benötigten Energiemenge entspricht.

8. Reinigungsvorrichtung (142) nach einem der vorhergehenden Ansprüche, wobei das Bus-System (120) mindestens einen CAN-Bus umfasst.

9. Reinigungsvorrichtung (142) nach einem der vorhergehenden Ansprüche, wobei jeweils eine Ansteuerstrategie einem Betriebszustand zugeordnet ist, wobei der Betriebszustand definiert ist durch einen oder mehrere der folgenden Parameter: eine Betriebsart der Reinigungsvorrichtung (142); ein Reinigungsprogramm; eine Beladung mit Reinigungsgut (144); eine zur Verfügung stehende Leistung, insbesondere eine zur Verfügung stehende Gesamtleistung; eine spezielle Hardware-Ausstattung der Reinigungsvorrichtung (142).

10. Reinigungsvorrichtung (142) nach einem der vorhergehenden Ansprüche, wobei die Ansteuerstrategien einen oder mehrere der folgenden Parameter beinhalten: eine Solltemperatur, insbesondere eine Solltemperatur eines Reinigungsfluids und/oder eine Tanktemperatur; eine Menge an Reinigungsfluid, insbesondere eine Wassermenge und/oder eine Menge eines Dampfs; eine Transportgeschwindigkeit eines Transports von Reinigungsgut (144) durch die Reinigungsvorrichtung (142); eine Beladung der Reinigungsvorrichtung (142) mit Reinigungsgut (144); eine Abluftmenge.

11. Reinigungsvorrichtung (142) nach einem der vorhergehenden Ansprüche, wobei die modulare Steuerung (110) weiterhin mindestens eine Leistungserfassungseinheit (118) umfasst, wobei die Leistungserfassungseinheit (118) über das Bus-System (120) mit der Maschinensteuerung (112) verbunden ist, wobei die Leistungserfassungseinheit (118) eingerichtet ist, um eine von der Reinigungsvorrichtung (142) aufgenommene Leistung, insbesondere eine Gesamtleistung, zu erfassen.

12. Reinigungsvorrichtung (142) nach dem vorhergehenden Anspruch, wobei die Leistungserfassungseinheit (118) mindestens eine Sicherheitsfunktionen aufweist und eingerichtet ist, um die Reinigungsvorrichtung (142) in einen sicheren Zustand zu überführen, wenn die erfasste aufgenommene Leistung einen vorgegebenen oder vorgebbaren Maximalwert überschreitet.

13. Reinigungsvorrichtung (142) nach einem der beiden vorhergehenden Ansprüche, wobei die Maschinensteuerung (112) eingerichtet ist, um mindestens einen Lernmodus durchzuführen, wobei in dem Lernmodus mindestens ein Element der Reinigungsvorrichtung (142), insbesondere mindestens ein Verbraucher (116) und/oder ein Aktor, angesteuert wird, wobei die Maschinensteuerung (112) eingerichtet ist, um die dabei von der Leistungserfassungseinheit (118) erfasste Leistung zu speichern.

14. Reinigungsvorrichtung (142) nach dem vorhergehenden Anspruch, wobei die Maschinensteuerung (112) eingerichtet ist, um die gespeicherten Leistungen für eine Erstellung der Ansteuerstrategien zu verwenden.

15. Reinigungsvorrichtung (142) nach einem der vier vorhergehenden Ansprüche, wobei die Maschinensteuerung (112) eingerichtet ist, um aus der von der Leistungserfassungseinheit (118) erfassten Leistung und/oder einer Änderung der erfassten Leistung auf mindestens einen Zustand mindestens eines Elements der Reinigungsvorrichtung (142), insbesondere mindestens eines Verbrauchers (116) und/oder eines Aktors, zu schließen, insbesondere auf einen Verschleiß und/oder eine Verkalkung.

16. Reinigungsvorrichtung (142) nach einem der vorhergehenden Ansprüche, wobei mindestens eine der Ansteuerstrategien eingerichtet ist, um mindestens eine Funktionsgruppe der Reinigungsvorrichtung (142) einzuschalten oder abzuschalten, wobei die Funktionsgruppe eine Mehrzahl von Elementen der Reinigungsvorrichtung (142) umfasst, insbesondere eine Mehrzahl von Verbrauchern (116) und/oder Aktoren.

17. Reinigungsvorrichtung (142) nach einem der vorhergehenden Ansprüche, wobei die modulare Steuerung (110), insbesondere die Maschinensteuerung (112), eingerichtet ist, um mit einem externen Energiemanagement-System (160) in Wechselwirkung zu treten, insbesondere in eine bidirektionale Wechselwirkung, wobei die Maschinensteuerung (112) eingerichtet ist, um entsprechend dieser Wechselwirkung eine Ansteuerstrategie bereitzustellen.

18. Verfahren zur Steuerung einer Reinigungsvorrichtung (142) zur Reinigung von Reinigungsgut (144), insbesondere einer Reinigungsvorrichtung (142) nach einem der vorhergehenden Ansprüche, wobei die Reinigungsvorrichtung (142) mindestens zwei Verbraucher (116) umfasst, wobei die Reinigungsvorrichtung (142) eine modulare Steuerung (110) mit einer Maschinensteuerung (112) und mindestens einem kontaktloses Steuerelement (114) umfasst, wobei die Maschinensteuerung (112) mindestens ein Reinigungsprogramm durchführen kann, wobei das kontaktlose Steuerelement (114) mindestens einen der Verbraucher (116) variabel mit Energie versorgen kann, wobei die Maschinensteuerung (112) mindestens zwei verschiedene Ansteuerstrategien für die Reinigungsvorrichtung (142) bereitstellen kann, wobei jede Ansteuerstrategie Informationen über benötigte Energien der Verbraucher (116) umfasst, wobei die Maschinensteuerung (112) dem kontaktlosen Steuerelement (114) über ein Bus-System (120) Informationen über die benötigten Energien der zugehörigen Verbraucher (116) entsprechend einer ausgewählten Ansteuerstrategie übermittelt, wobei das kontaktlose Steuerelement (114) mindestens einen zugehörigen Verbraucher (116) mit der jeweiligen benötigten Energie beaufschlagt.
